# EUROPEAN PATENT APPLICATION

(11) **EP 4 786 803 A1**
(43) Date of publication of application: **05.08.2026**
(21) Application number: 26154573.5
(22) Date of filing: 27.01.2026
(51) Int. Cl.: F16B 5/06

(54) **DETACHABLE FASTENER CLIP**

(30) Priority: 01.02.2025 US 202563752749 P; 20.01.2026 US 202619452911
(71) Applicant: Termax Company, Lake Zurich, IL 60047 (US)
(72) Inventor: DICKINSON, Daniel James, Lincolnshire, Illinois, 60069 (US); FRIESORGER, David, McHenry, Illinois, 60050 (US)
(74) Representative: Weinstein Services & Conseils

(57) **Abstract**

A detachable automotive fastener clip (20) and grommet (30) removably attaches a body panel to a chassis slot. A grommet base (210) having an opening and at least two laterally spaced apart wings (230) on opposite ends of the grommet base to removably engage the chassis slot. Fingers (240) and wing tips are formed at an end of the at least two wings. The wings have an engagement region to engage and detach with the chassis slot. Ramp portions (540) on the head of each wall on an end opposite the clip base engage the tapered fingers to spring open when inserted and spring inward when removed. As the clip is inserted into the opening, the shoulder on laterally spaced apart parallel walls slide past the fingers and engage the wing tips to create a spring force on the wings resulting and a retention force greater than an insertion force.

## Description

### FIELD OF THE INVENTION

The invention relates generally to devices for fastening objects, and more particularly to an adaptive fastener for insertion into an engagement structure, such as a vehicle chassis, a hollow substrate, a door panel, a wall, a plate or any suitable surface.

### BACKGROUND OF THE INVENTION

A number of devices and fasteners are currently available for fastening panels, such as body panels and automobile interior trim piece panels, to the chassis of a vehicle. As used herein, a body panel refers to, for example, any interior or exterior body panel on a vehicle, an interior trim piece, door panel, headliner or any interior trim piece. The body panel may be for example plastic, metal, fiberglass, carbon fiber or any suitable material. Additionally, the panel may be any suitable exterior body panel, such as a fender, bumper, bumper cover, bracket, quarter panel or door panel. The chassis of the vehicle may include any substrate, plate, body panel, structural framework, chassis component or subcomponent, subframe, pillar, wall, bracket, or any suitable object.

These conventional fastener devices provide approximately relatively equal levels of insertion and extraction force. As a result, body panels often attach to the chassis of an automobile with a relatively high level of insertion force while providing a relatively low level of extraction force. Conventional fasteners are typically screws to provide high retention.

Conventional fasteners have wings secured at one end such as at the top or head of a fastener and thus the wings form a long lever limiting torque and as a result limiting engagement force. One-piece fasteners have a base to attach to a body panel and wings attached to the top of the fastener for fastening to a chassis slot. These conventional wings limit the maximum springing force of the wings. Wings secured at one end typically do not adequately secure the panel to the vehicle chassis. These wings are not suitable for high engagement force or heavy-duty applications. Further, conventional fasteners do not adequately secure the body panel into a chassis having variations in slot size and locations, or chassis, or sheet metal with different curvature or thicknesses throughout. Conventional fasteners result in movement or play due to these physical and environmental conditions.

If the chassis slot and the fastener are misaligned, then the forces on the wings are unequal since the wing closest to the slot edge will experience higher wing compression while the other wing will have insufficient springing force to engage the slot. As the clip is forced into the slot, such high forces on one wing may cause the wing to break off thus rendering the fastener incapable of fastening the body panel to the frame. Worse, the broken, damaged or weakened wing can cause detachment of the body panel or contribute to rattles.

The wings of conventional fasteners have a sharp, unsmooth groove to engage the edge of the chassis slot. When the conventional clip is removed, the sharp edges of the chassis slot cut into the softer plastic and cut a groove. During manufacture, the slots are typically formed in the frame or chassis of the vehicle, such as in an inner roof or door sheet metal structure, by punching the sheet metal. As the punch enters the sheet metal, the outer part of the sheet metal is pushed toward the inside and a metal puncture or ridge is formed on the inside of the sheet metal. The resulting slot edge on the outer part of the slot is relatively smooth; however, the inner part of the slot edge is sharp and rough. Upon removal of the fastener clip, the sharp edges of the frame cut off the groove so that the clip may not be reinserted and reusable.

If the slot is off-center or if the sheet metal varies in thickness or if tolerances in production of the slot in the vehicle chassis or in the trim-piece exist, for example, then engagement of one portion of the slot in the chassis with one of the wings may not provide suitable frictional engagement. Twisting of the body panel will be likely more prevalent because less than all contact points are actually made with the slot of the vehicle chassis. As a result, conventional single piece fasteners do not self-align themselves when the fastener and the body panel are misaligned and are prone to wing breakage such that the fastener cannot be re-attached.

Conventional one-sided wing style single piece fasteners do not self-align themselves when the fastener and the body panel are misaligned and are prone to wing breakage such that the fastener cannot be re-attached. Also, conventional fasteners are not suitable when subjected to a variety of environmental conditions, such as varying temperatures and in the presence of vibration at various levels of amplitude and frequency. For example, conventional fasteners of this type typically do not prevent or minimize the amount of buzzing, rattling or any other type of noise that may cause attention to the occupants of the vehicle or otherwise weaken the attachment. Conventional fasteners do not adequately accommodate various levels of production tolerances, such as various dimensions between, for example, the body panels as well as the vehicle chassis. Thus, conventional fastener devices typically do not self-align nor adequately fasten to a range of sheet metal thicknesses and do not minimize or eliminate buzzing and rattling and do not sufficiently accommodate variations in production tolerances. As a result, wear, squeaks, rattles, buzzing, corrosion and loss of elasticity and loss of sealing may result, especially after years of vehicle operation and exposure to vibration, heat, humidity, and other environmental conditions.

### BRIEF DESCRIPTION OF THE DRAWINGS

Fig. 1 is a perspective exploded view of a detachable automotive fastener clip comprising a grommet and clip in a pre-assembly position according to one embodiment;
Figs. 2, 3, and 4 are views of the grommet in a pre-assembly position according to another embodiment;
Figs. 5, 6, and 7 are views of the clip in a pre-assembly position according to another embodiment;
Figs. 8, 9, and 10 of the detachable automotive fastener clip in a stage 1 according to another embodiment;
Figs. 11, 12, 13, and 14 of the detachable automotive fastener clip in a stage 1 engaging a housing in a body panel according to one embodiment;
Figs. 15, and 16 of the detachable automotive fastener clip entering stage 1 and in a position prior to insertion into a chassis slot according to one embodiment;
Figs. 17 and 18 of the detachable automotive fastener clip in a stage 1 and in a position during insertion into a chassis slot according to one embodiment;
Figs. 19, 20, and 21 of the detachable automotive fastener clip in a stage 1 and in a position engaged into a chassis slot according to one embodiment;
Figs. 22 and 23 of the detachable automotive fastener clip in a transition between stage 1 and stage 2 and in a position as the head of the clip spreads the fingers spring apart according to one embodiment;
Figs. 24, 25 and 26 of the detachable automotive fastener clip in a transition between stage 1 and stage 2 and in a position as a head of the clip passes the finger tips according to one embodiment;
Figs. 27, 28, 29 and 30 of the detachable automotive fastener clip in a stage 2 and in a position as the shoulder engages the finger tips and the wings engage the chassis slot according to one embodiment;
Figs. 31 and 32 of the detachable automotive fastener clip in a stage 2 and in an engaged position with the chassis slot according to one embodiment;
Figs 33, 34, 35, 36, and 37 of the detachable automotive fastener clip in a removal process from stage 2 to stage 1; and
Figs 38, 39, 40, and 41 illustrate the detachable automotive fastener clip and a screw according to another embodiment; and
Figs 42 through 59 illustrate the detachable automotive fastener clip, clip, grommet and screw.

### DETAILED DESCRIPTION OF THE PREFERRED EMBODIMENTS

A detachable automotive fastener clip removably attaches a body panel to a chassis slot. The fastener clip includes a clip for insertion into a grommet. The grommet is removably attached to the chassis slot. The grommet includes a grommet base having an opening and at least two laterally spaced apart wings on opposite ends of the grommet base. The wings may be approximately in parallel to each other in a stage 1. Fingers are formed at an end of the least two wings opposite the grommet base. Fingers include a tapered portion. Wing tips are formed at an end of the at least two wings. The wings have an engagement region formed on the at least two wings between the grommet base and the fingers to engage and detach with the chassis slot. The fastener clip includes a clip to removably attach to the grommet. The clip has a head at one end of the clip. The clip includes a clip base at the opposite end of the head. Two laterally spaced apart parallel walls extend from the clip base. Ramp portions on the head of each wall on an end opposite the clip base engage the tapered fingers to spring open when inserted and spring inward when removed. A shoulder on the parallel walls in the head engage the wing tips. A taper is formed on the parallel walls between the head and the clip base. As the clip is inserted into the opening, the shoulder on the laterally spaced apart parallel walls slide past the fingers and engage the wing tips. The shoulder engages the wing tips to create a spring force on the wings resulting and a retention force greater than an insertion force.

Among other advantages, the fastener clip provides a very high level of insertion force while providing a relatively low level of extraction force especially when compared to conventional fasteners that provide approximately relatively equal levels of insertion and extraction force. The high level of engagement force results from the wing having support at two points, between the shoulder and the wing tips, and between the engagement region and the slot edge. The two points of support provide a higher stiffness resulting in a very high extraction force suitable for heavy-duty applications.

Heavy duty and high retention clips have automotive applications in high retention force environments such as pull handles, visors, A, B, and C pillars. For conventional high retention applications, metal may be used because of the high retention force. However, metal clips engage a slot in an automotive chassis and may have the ability to adjust or adapt to different chassis thickness or variations in slot dimensions such as in variations in production tolerance. Metal clips may also include depressions in the metal to increase retention however manufacturing tolerances can reduce retention. Also, convention fasteners such as screws do not adapt to sheet metal thickness and thus do not accept tolerances in production dimensions such as the distance from the chassis to a body panel. Screws however may back out, loosen and disengage. These conventional clips exhibit tolerances that result in looseness causing movement, vibration, rattling and even the clip not engaging the chassis slot at all. Further, conventional clips are expensive to manufacture. Conventional plastic clips do not have the high retention force necessary for heavy duty application and thus conventional high retention clips are not made of plastic.

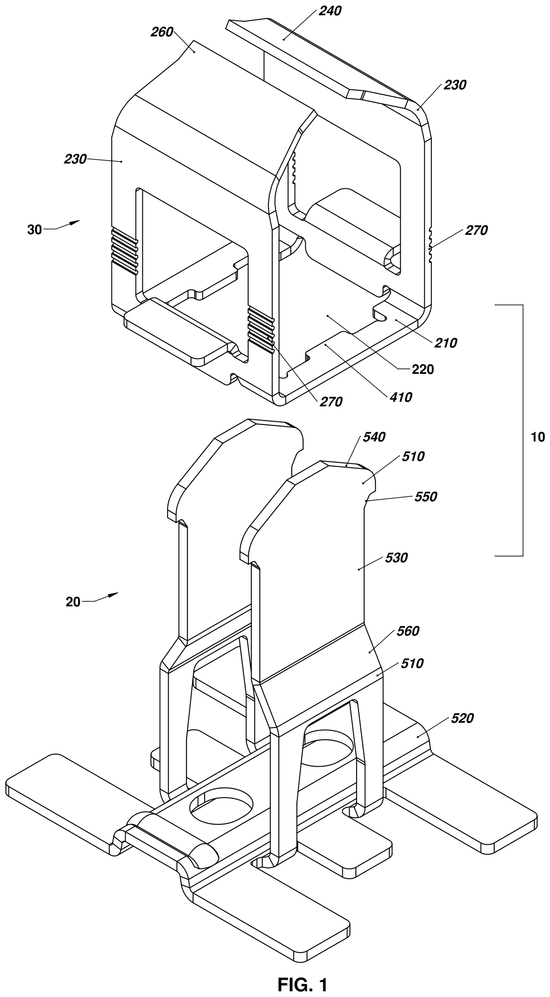

Fig. 1 is a perspective exploded view of a detachable automotive fastener clip 10 including a clip 20 and grommet 30 in a pre-assembly position according to one embodiment. The clip 20 and grommet 30 may be made of metal, or alternatively of non-metal material such as plastic and provides high retention forces suitable for heavy duty applications.

The fastener clip 10 removably attaches a body panel 1130 to a chassis slot 1530 of a vehicle chassis 1520. The fastener clip 10 includes the clip 20 for insertion into the grommet 30. The grommet 30 is removably attached to the chassis slot 1530. Among other advantages, the clip 20 may be removed and reattached from the grommet 30.

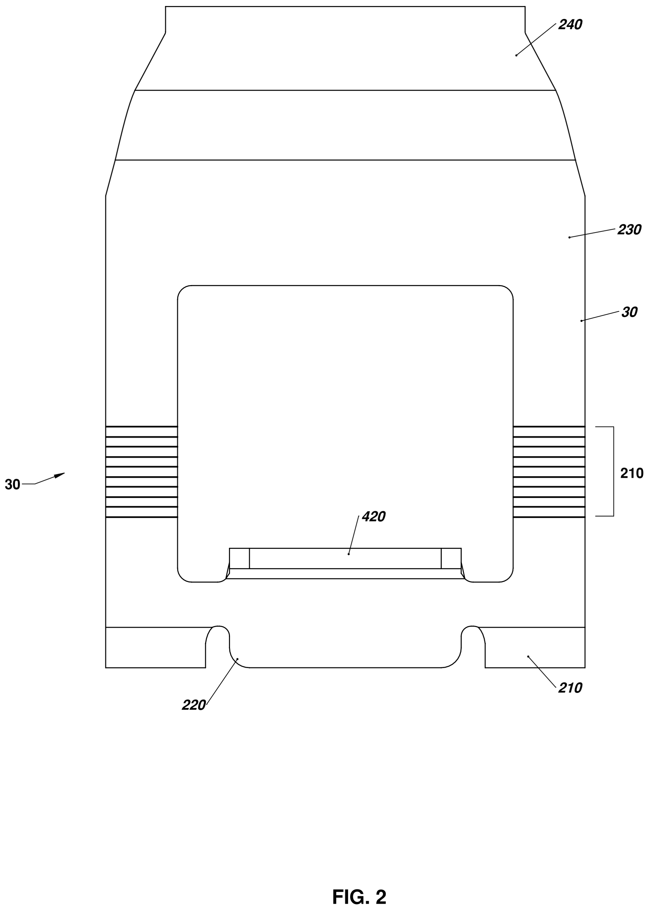

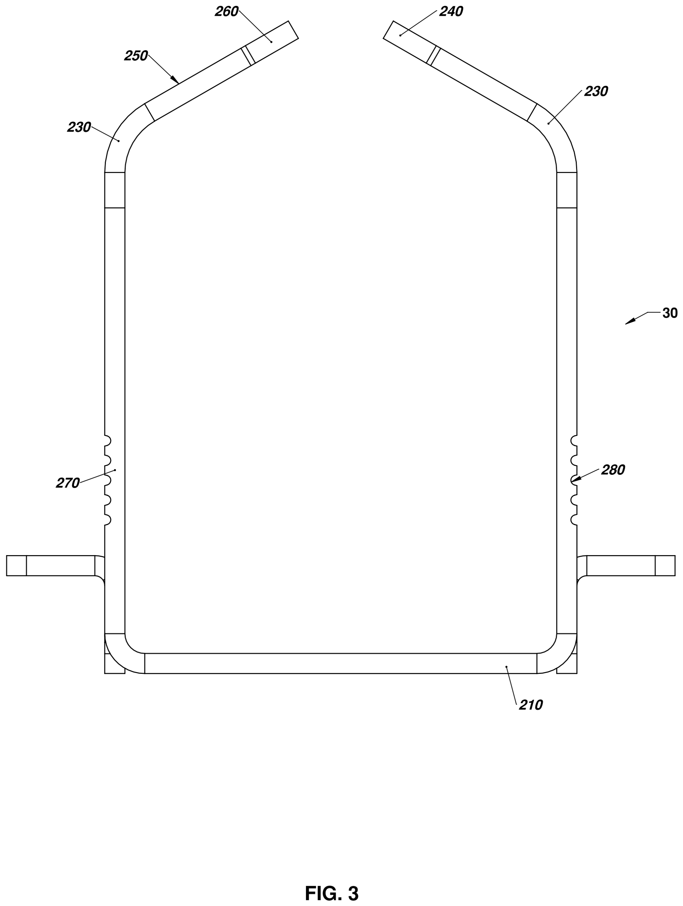

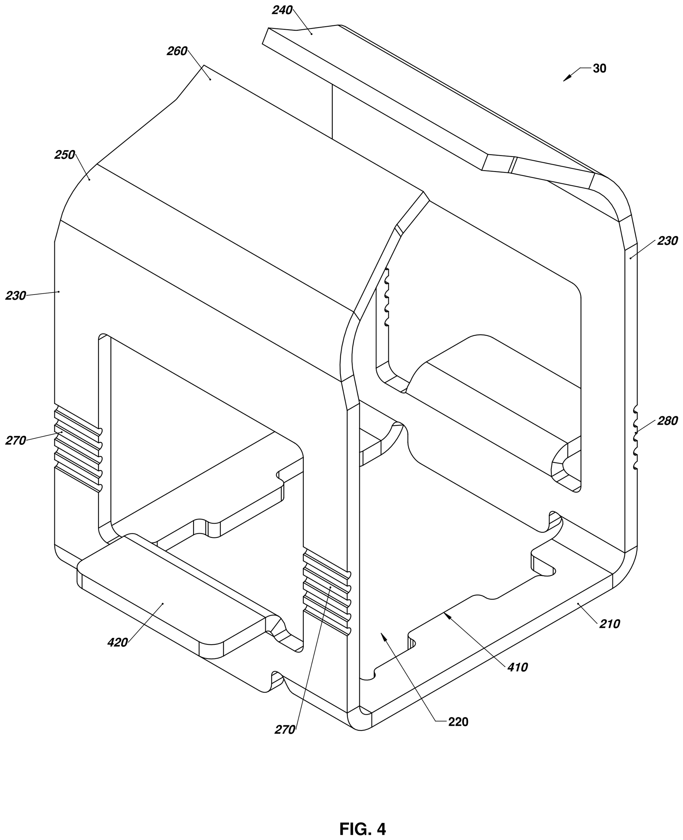

Figs. 2, 3, and 4 are views of the grommet 30 in a pre-assembly position according to another embodiment. The grommet 30 includes a grommet base 210 having an opening 220 and at least two laterally spaced apart wings 230 on opposite sides or ends of the grommet base 210. The wings 230 are shown parallel to each other in a pre-assembly position or in a stage 1. Fingers 240 are formed at an end of the at least two laterally spaced apart wings 230 opposite the grommet base 210. Fingers 240 may include a tapered finger 250 to facilitate "lead in" of the grommet 30 into the chassis slot 1530 and to allow the ramp portions 540 to slide and expand the at least two laterally spaced apart wings 230. Wing tips 260 are formed at an end of the at least two laterally spaced apart wings 230. The at least two laterally spaced apart wings 230 have an engagement region 270 formed on the at least two wings 230 between the grommet base 210 and the fingers 240, to engage and detach with the chassis slot 1530. The engagement region 270 for example may have ripples, ribs, teeth, dimples, bumps, grooves or any suitable shape or any suitable surface to engage the chassis slot 1530.

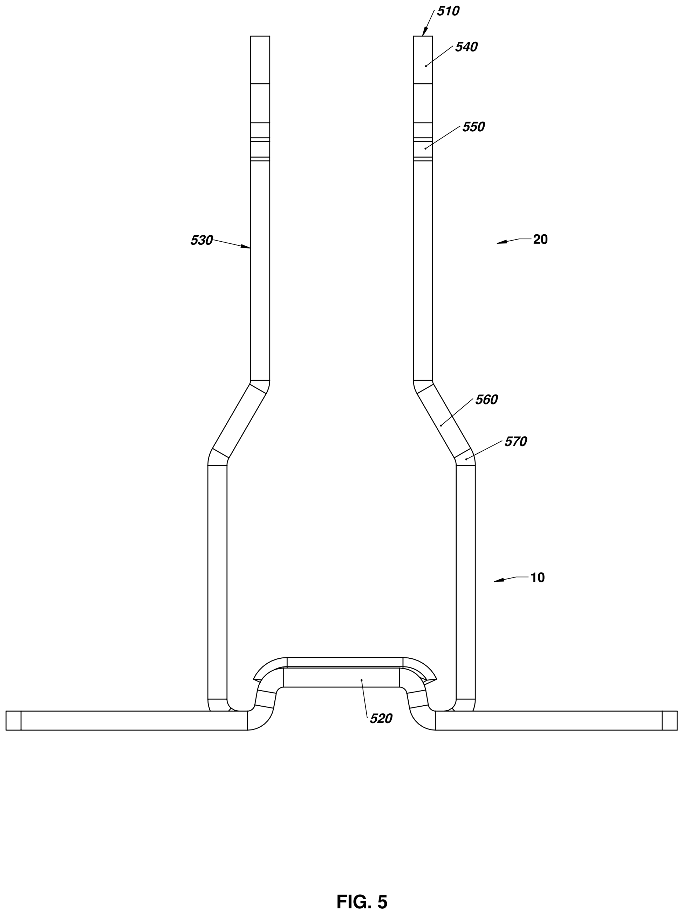

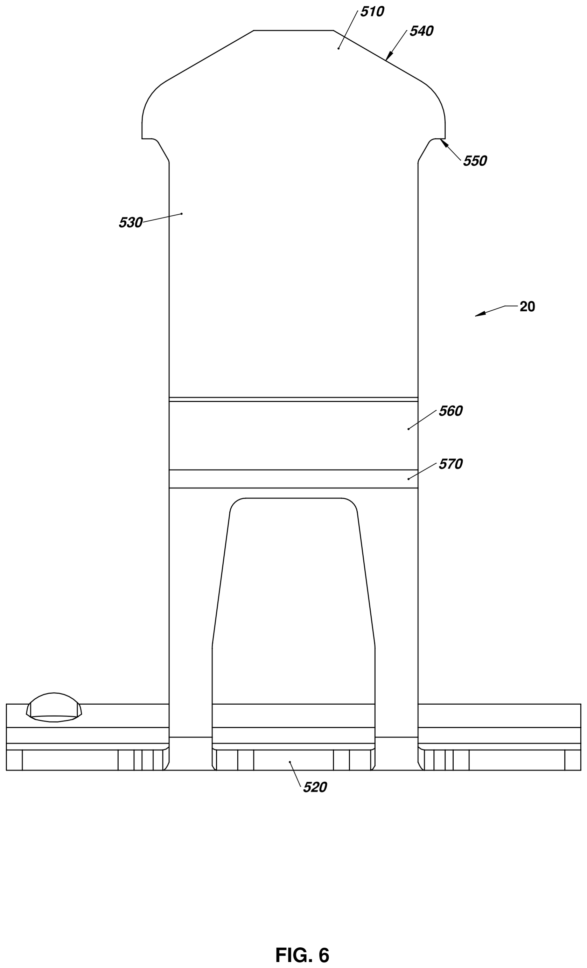

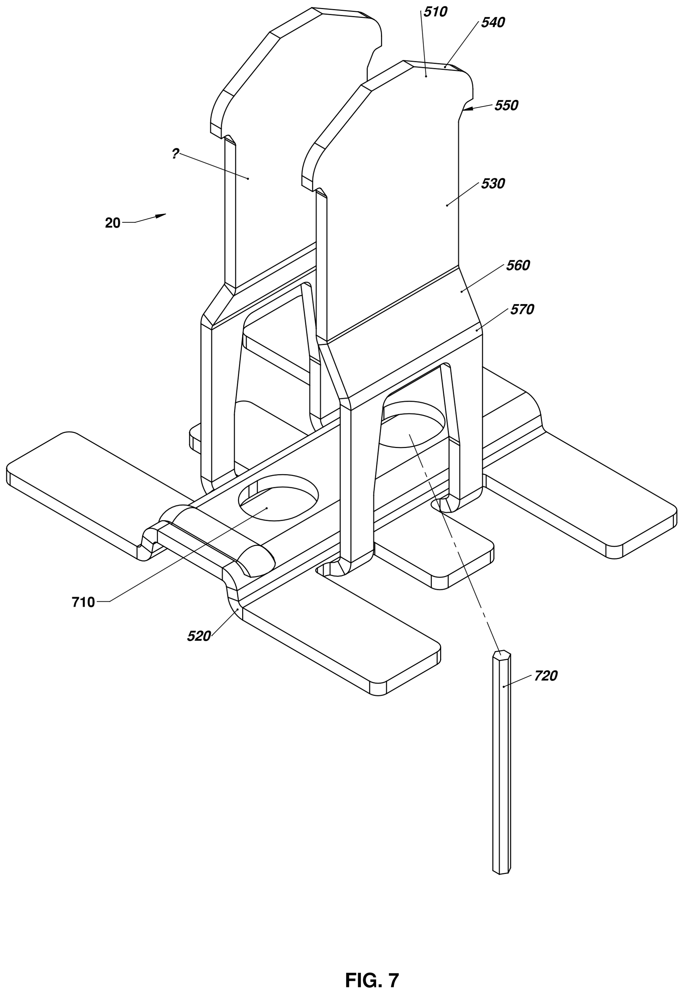

Figs. 5, 6, and 7 are views of the clip 20 in a pre-assembly position according to one embodiment. The fastener clip 10 includes the clip 20 to removably attach to the grommet 30. The clip 20 has a head 510 at one end of the clip 20. The clip 20 includes a clip base 520 at the opposite end of the head 510. Two laterally spaced apart parallel walls 530 extend from the clip base 520. Ramp portions 540 on the head of each wall 530 on an end opposite the clip base 520 engage the fingers 240 to spring open when inserted and spring inward when removed. According to one embodiment the fingers 240 have a tapered finger 250 section.

As the ramp portions 540 of the clip 20 are inserted into the opening 220 at a first stage, the ramp portions 540 slide past the fingers 240, such that the fingers 240 spread apart and then snap together as the wing tips 260 engage the shoulders 550 at a second stage.

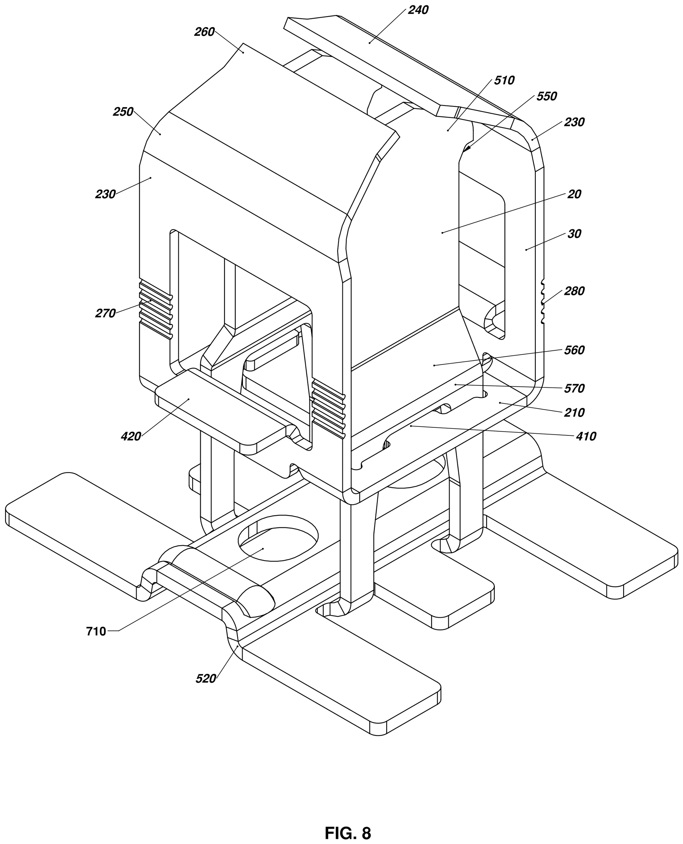

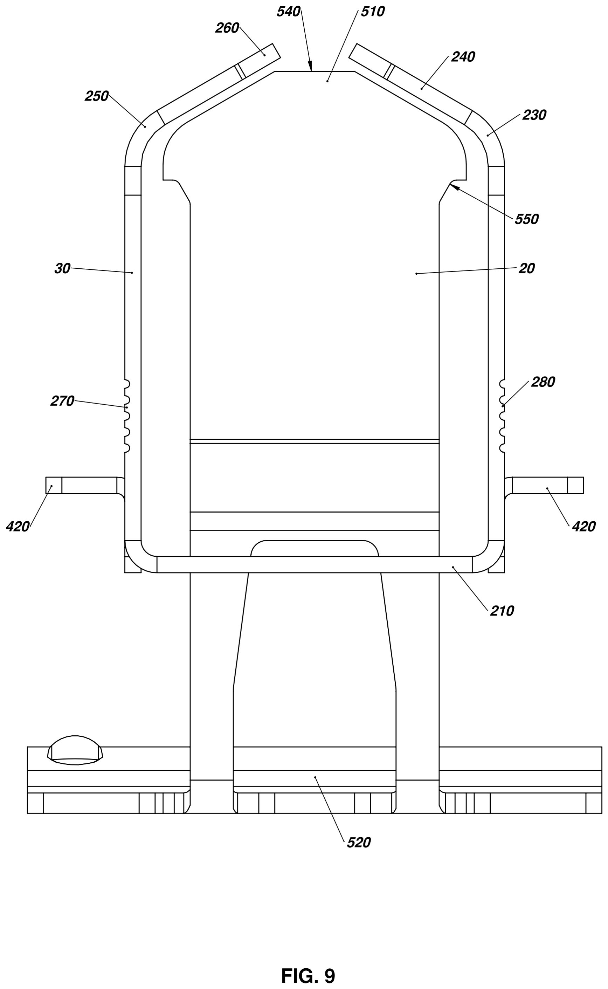

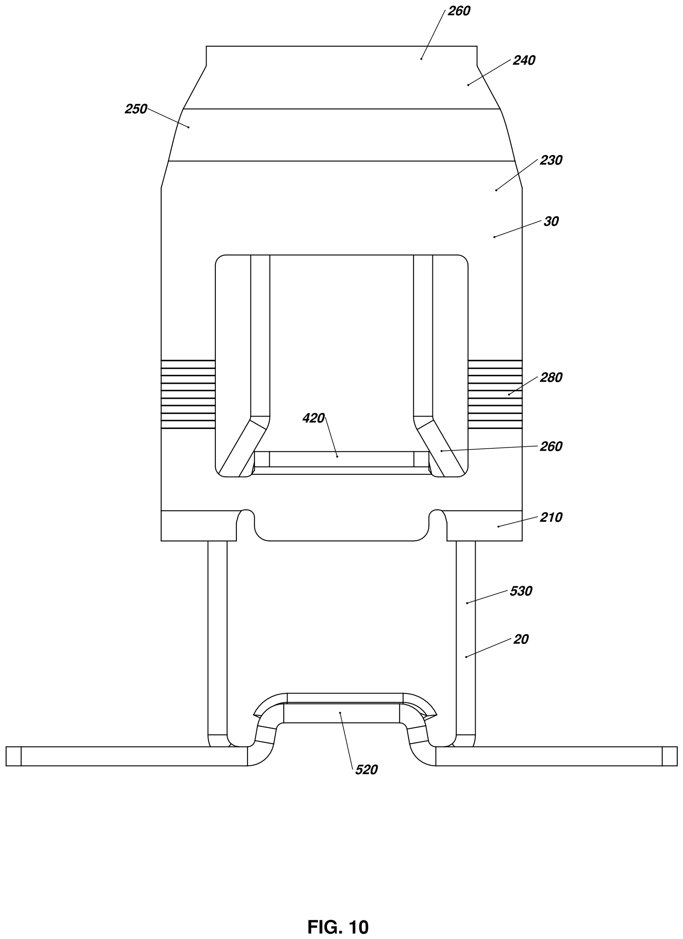

Figs. 8, 9, and 10 illustrate the fastener clip in a stage 1 according to another embodiment. A shoulder 550 on the parallel walls 530 in the head 510 engage the wing tips 260. A taper 560 is formed on the parallel walls 530 between (substantially at a midpoint) the head 510 and the clip base 520. As the clip 20 is inserted into the opening 220, the shoulder 550 on the laterally spaced apart parallel walls 530 slide past the fingers 240 and engage the wing tips 260. The shoulder 550 engages the wing tips 260 to create a spring force on the wings 230 resulting and a retention force greater than an insertion force. Reference to shoulder 550 also refers to shoulders 550 where appropriate such as to engage wing tips 260.

The taper 560 further includes a taper ledge 570. At least one inwardly facing tab 410 is formed in the grommet base 210, such that the at least one inwardly facing tab 410 engages the taper ledge 570 to resist removal of the clip 20 from the grommet 30 at the first stage. To remove, the walls 530 spring inwardly to disengage the taper ledge 570 from the at least one inwardly facing tab 410 to facilitate removal of the clip 20 from the grommet 30. The at least one inwardly facing tab 410 may be inwardly facing on opposing sides of the grommet base 210.

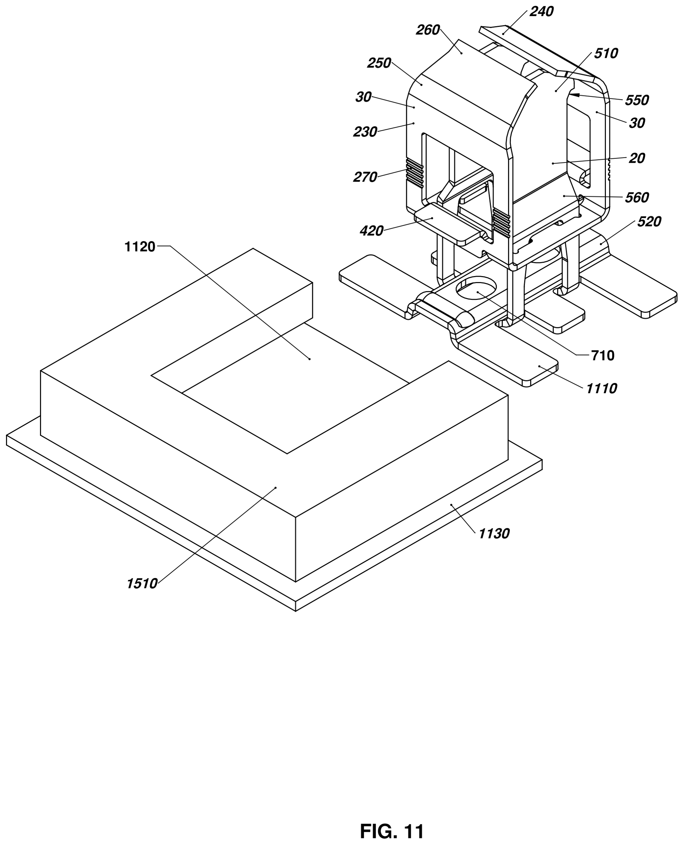

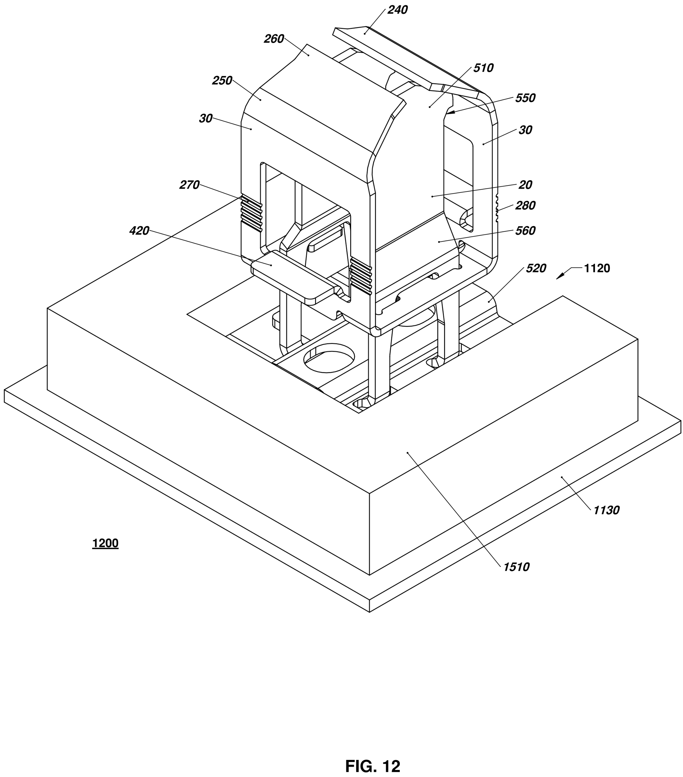

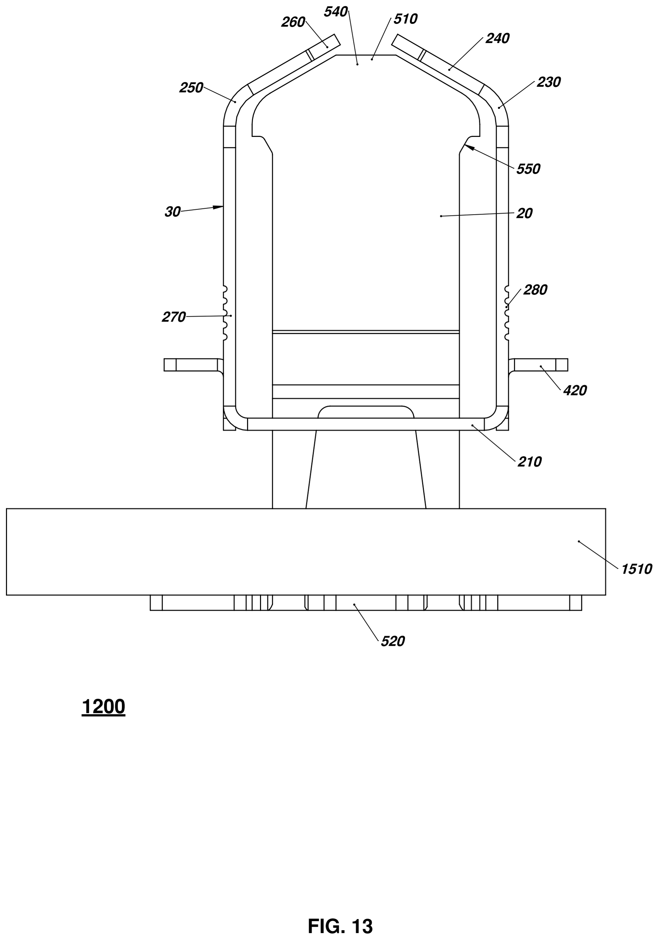

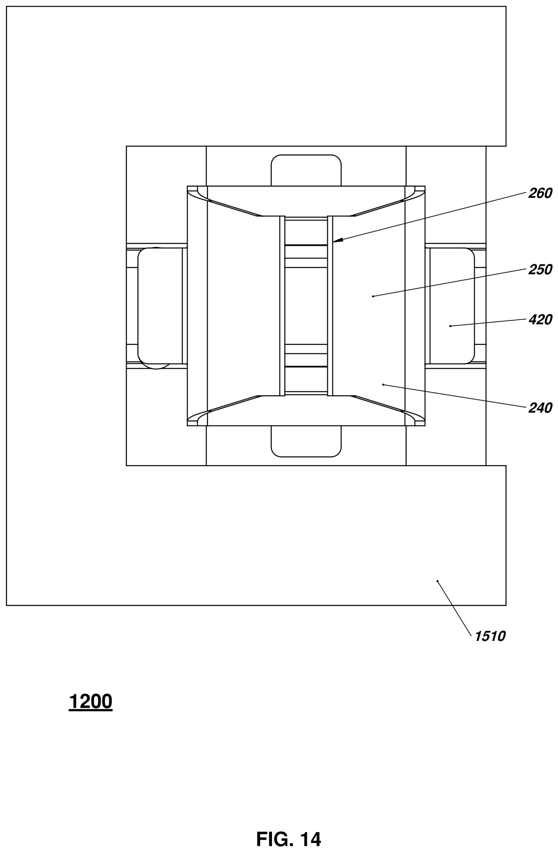

Figs. 11, 12, 13, and 14 illustrate the fastener clip in a stage 1 in a position to slide into a housing 1510 in a body panel 1130 according to one embodiment. The clip 20 may include clip legs 1110 on the clip base 520 wherein the housing 1510 has an opening 1120 on one side such that the clip legs 1110 removably engage the housing 1510. The housing 1510 may be suitably formed and integrated into the body panel 1130 in order to attach the body panel to the vehicle. The housing 1510 may be open in one end to allow clip legs 1110 in and may be closed on the other end of the housing 1510 to prevent clip legs 1110 from sliding too far and to stabilize and support the clip legs 1110. The housing 1510 and or the clip legs 1110 may include an interlocking mechanism 5900 (such as a springing tab) to resist removal of the clip legs 1110 from the housing 1510. Among other advantages, the fastener 10 may be inserted into the housing 1510 such that that fastener 10 is securely attached to the body panel 1130. Thus, the fastener 10 and body panel 1130 may be shipped to the vehicle assembler so that the body panel 1130 may be easily attached to the vehicle during vehicle assembly. Thus, a panel assembly 1200 may be ready to be mated by pushing the panel assembly 1200 into the vehicle chassis 1520 or suitable frame during assembly such that each of the wings 230 independently self-align and fasten to a corresponding chassis slot 1530. According to one embodiment, the body panel 1130 seats against vehicle chassis 1520 so that there is substantially zero gap between the body panel 1130 and the vehicle chassis 1520. Among other advantages the body panel 1130 is stabilized in the vehicle chassis 1520 and provides a suitable fit and finish.

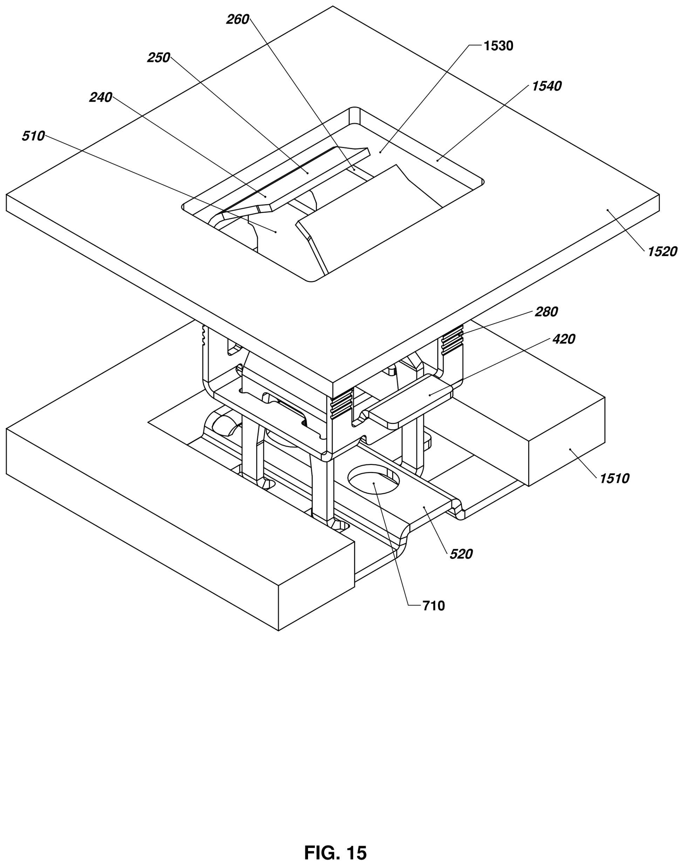

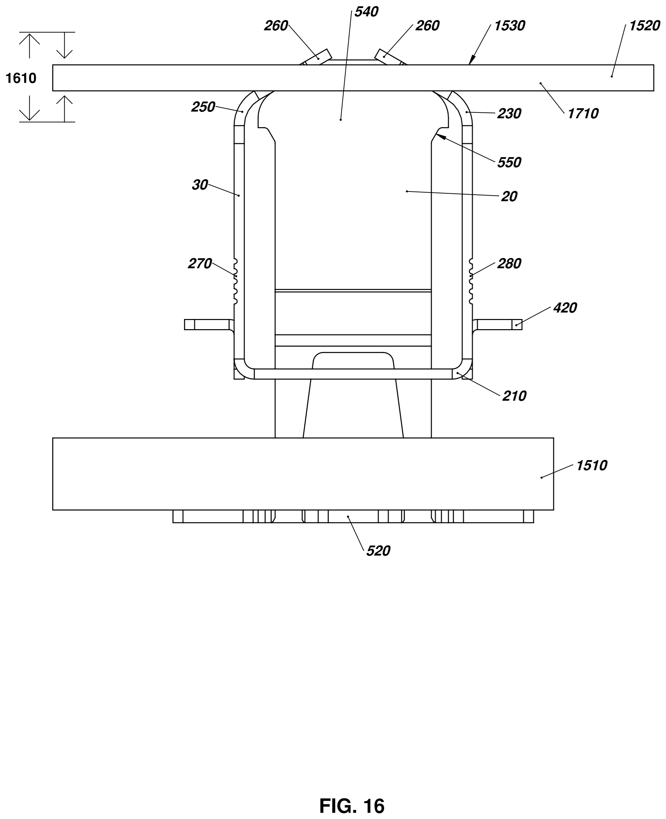

Figs. 15, and 16 of the fastener clip in a stage 1 and in a position prior to insertion into a chassis slot according to one embodiment. The vehicle chassis 1520 has a chassis slot 1530 and slot edges 1540. The grommet 30 includes a tapered finger 250 on the fingers 240 between the wing tips 260 and the wings 230. The tapered finger 250 on the fingers 240 allow for easy insertion into the chassis slot 1530.

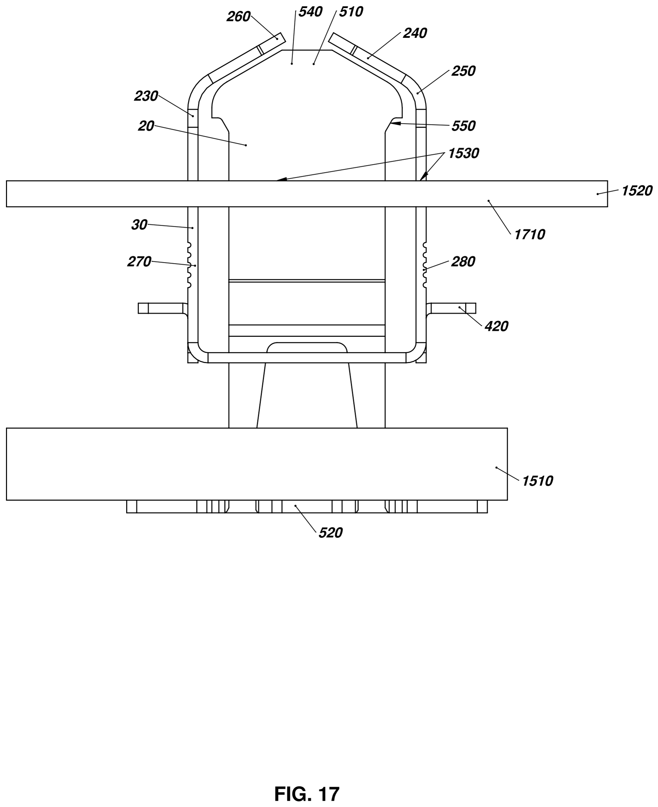

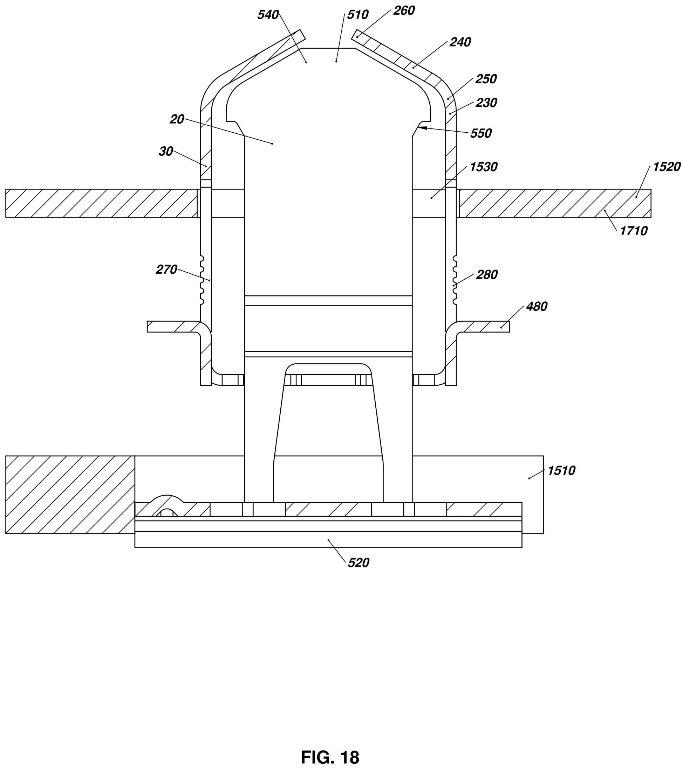

Figs. 17 and 18 illustrate the fastener clip 20 in a stage 1 and in a position during insertion into a chassis slot 1530 according to one embodiment. The fingers 240 and tapered finger 250 also function as lead-in section functions to align the clip 10 into a slot 1530 even if the clip 10 is misaligned with the slot 1530. As each wing 230 is pushed into the corresponding chassis slot 1530, the wing 230 self-aligns into the chassis slot 1530. According to one embodiment, the wing 230 may be misaligned with the corresponding misaligned mating chassis slot 1530, yet the wing 230 self-aligns. The fingers 240 act as a lead-in portion to adapt to the misaligned chassis slot 1530 by automatically aligning the wings 230 on the clip 20 with the chassis slot 1530. For example, the fingers 240 lead-in and move and align ISendthe clip 20 into the chassis slot 1530 such that the wings 230 engage the chassis slot 1530 with substantially balanced force between the wings 230; substantially equal force or at least avoids breaking or damaging at least one of the wings 230. The clip 10 for example, may be attached to a body panel such as an interior overhead panel or pull handle.

The clip 20 and grommet 30 when inserted and supported in the slot 1530 permits relatively easy insertion of the fastener clip 10 into a slot 1530 formed within the vehicle chassis 1520 while providing a relatively high level of extraction force from the vehicle chassis 1520 when the fastener clip 10 is inserted.

Assembly of the body panel 1130 onto the vehicle chassis 1520 requires a relatively low level of insertion force compared to the extraction force, and as a result provides many ergonomic advantages. For example, the relatively low level of insertion force is particularly advantageous for assembly line operators who repetitively insert body panels onto the vehicle chassis 1520. The relatively low level of insertion force required for inserting the body panel 1130 into the vehicle chassis 1520 may result in fewer injuries to the assembly workers, including injuries related to repetitive stress syndrome. By eliminating conventional clips for fastening to the frame or vehicle chassis 1520, assembly of the body panel 1130 with the detachable fastener clip 10 significantly reduces material costs, assembly costs, and/or servicing time and servicing cost depending on the application. Further, by eliminating multiple fasteners for different sheet metal thicknesses, confusion during assembly is eliminated or reduced since the same type of fastener may be used for all slots. Thus, an assembly worker need not worry about selecting the wrong fastener for different slot thicknesses.

According to one embodiment, the panel assembly 1200 may be pre-assembled with fastener 10 including clip 20, grommet 30, and optionally retainer 40 and delivered to an assembler of the body panel assembly such as a door, visor or headliner assembly. The panel assembly 1200 is ready for attachment to the body panel 1130 during final vehicle assembly by pushing the assembly 1200 into chassis slot 1530 of chassis 1520. Thus, the assembler of the door, visor or headliner assembly simply attaches the panel assembly 1200 by pushing it into the chassis slot 1530.

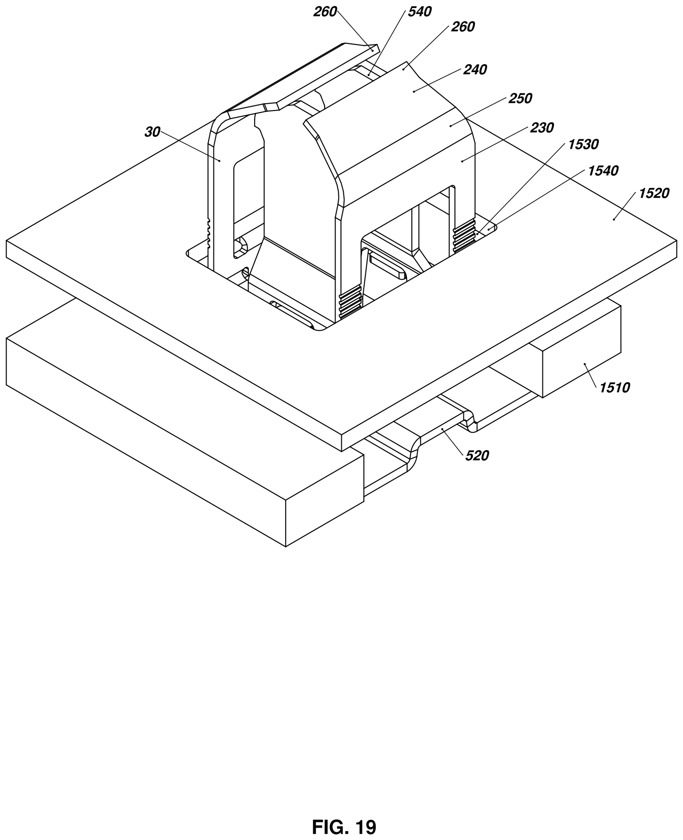

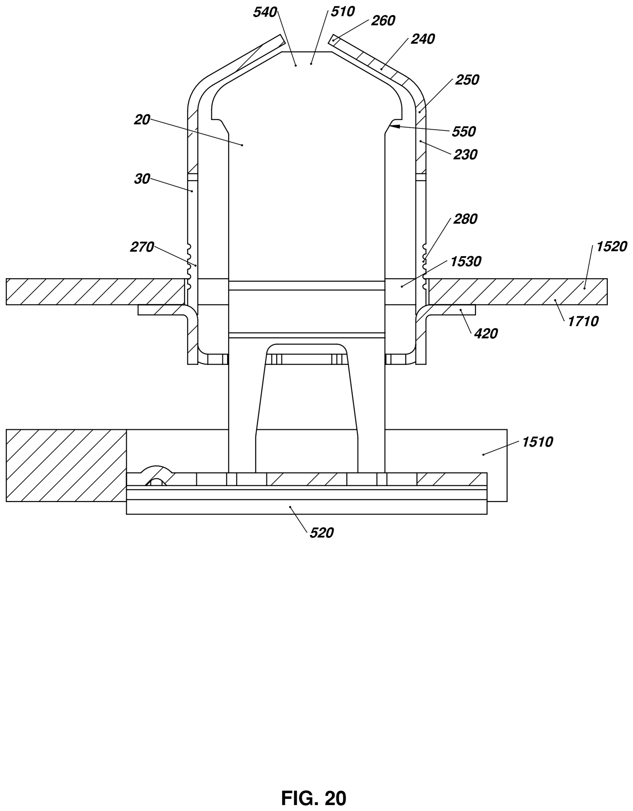

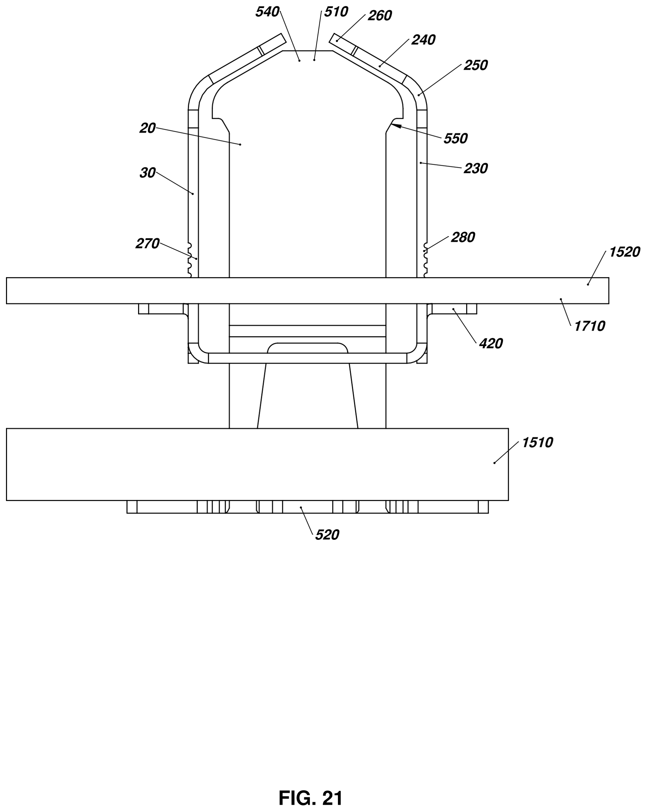

Figs. 19, 20, and 21 of the fastener clip 20 in a stage 1 and in a position engaged into a chassis slot 1530 according to one embodiment. The wing 230 includes a paddle 420 formed on the wings 230 adjacent to the grommet base 210 wherein the paddle 420 engages an inside surface 310 of the chassis slot 1530 to resist further insertion of the grommet 30 into the chassis slot 1530.

As the clip 20 and grommet 30 are inserted into the chassis slot 1530, the ramp portions 540 slide past an inside surface 310 of the tapered fingers 250 while an outside surface 320 of the tapered fingers 250 guide insertion of the grommet 30 through the slot edges 1540 into the chassis slot 1530. The outside surface 320 of the tapered fingers 250 spring inwardly and the ramp portions 540 allow the tapered fingers 250 to slide together inwardly.

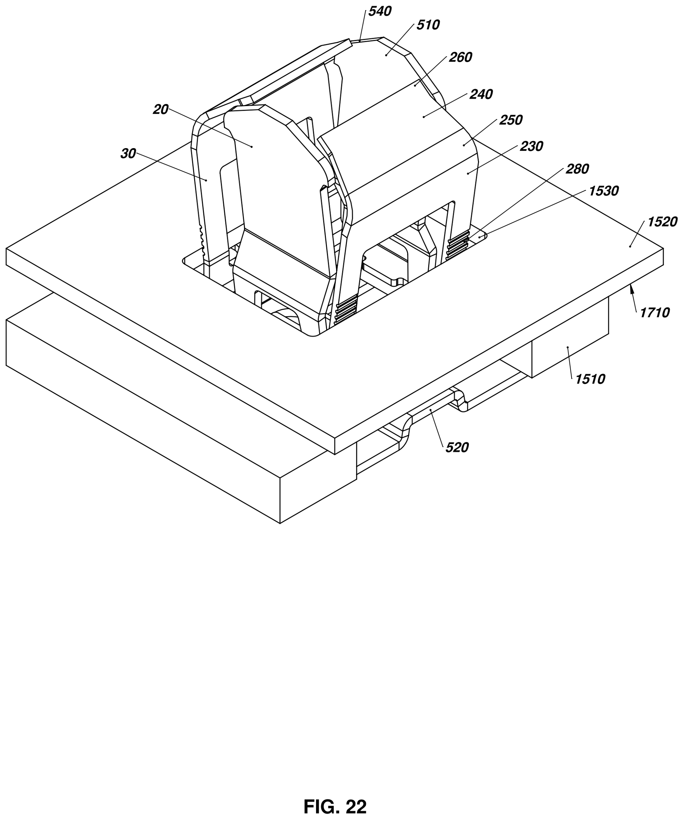

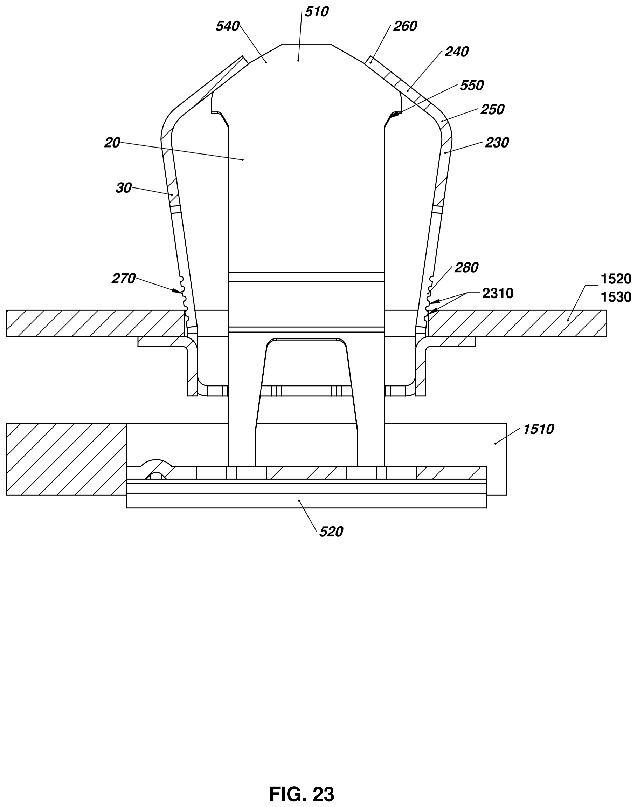

Figs. 22 and 23 of the fastener clip 20 in a transition between stage 1 and stage 2 and in a position as head 510 of the clip 20 spreads the fingers 240 to spring apart according to one embodiment. As the clip 20 is further inserted into the grommet 30, the shoulder 550 slides past the tapered fingers 250 resulting in the wings 230 spread apart outwardly and the engagement region 270 engages the slot edges 1540. The tapered finger 250 is formed on the fingers 240 between the wing tips 260 and the wings 230.

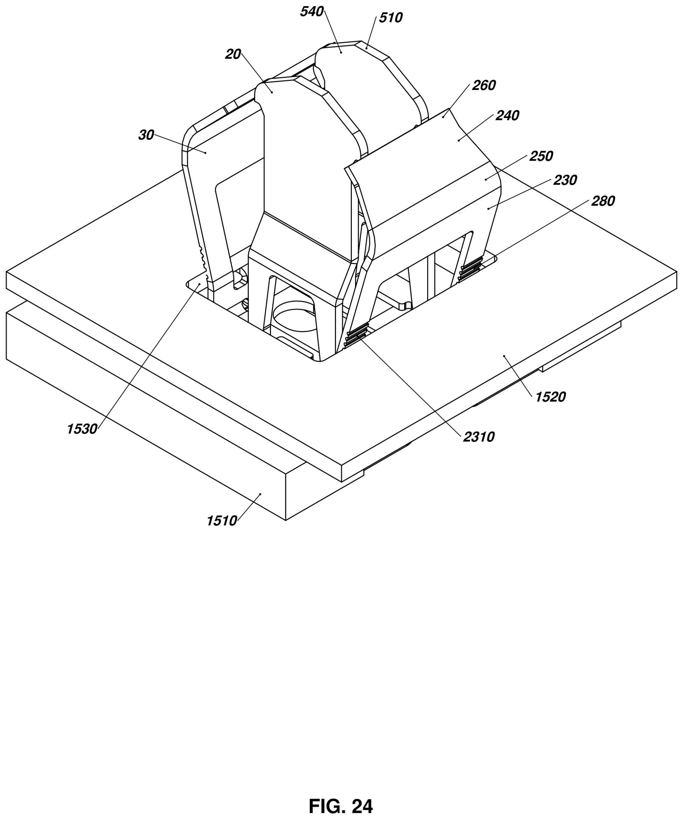

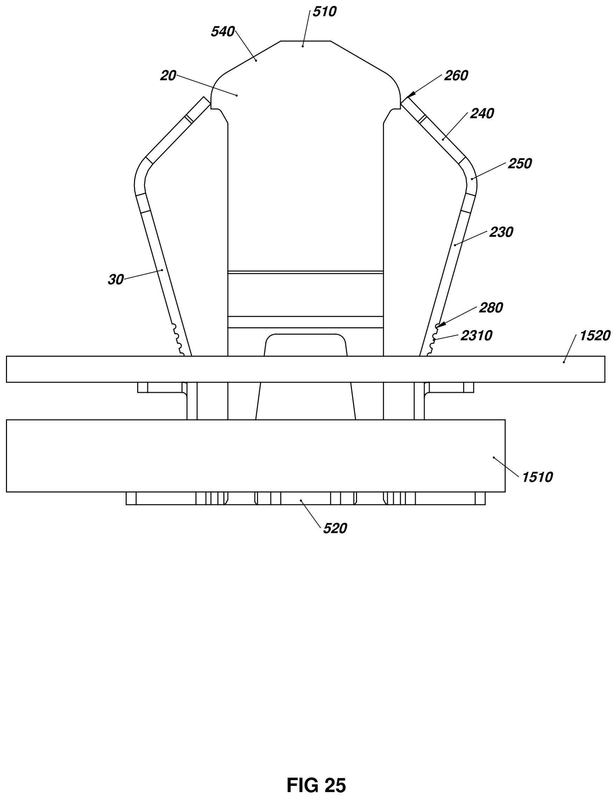

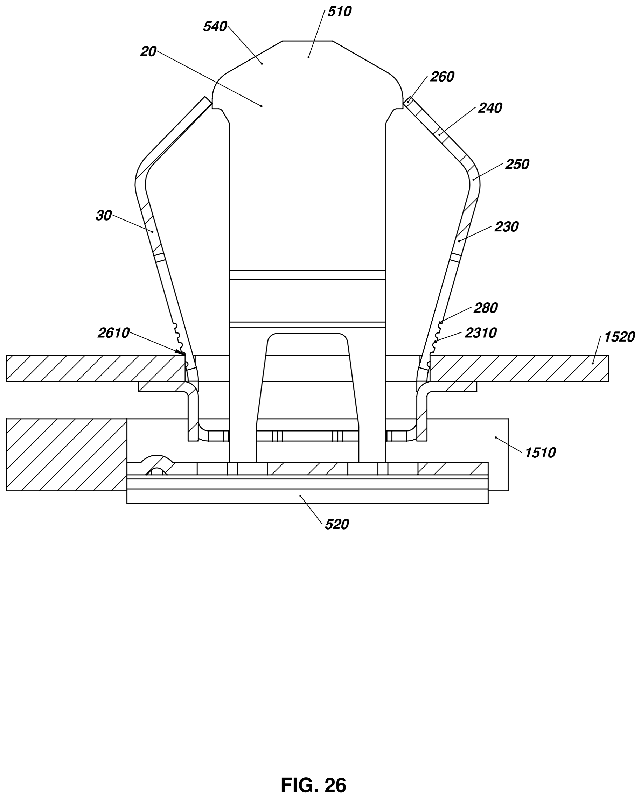

Figs. 24, 25 and 26 illustrate the fastener clip 10 in a transition between stage 1 and stage 2 and in a position as a head 510 of the clip 20 passes the wing tips 260 according to one embodiment. As the paddle 420 engages the chassis slot 1530, the clip 20 continues insertion into the grommet 30 and the ramp portion 540 spreads the fingers 240 and the wing tips 260 flex outwardly after sliding past the ramp portion 540 to snap into the shoulders 550 maintaining a springing force between the wings 230 and to further engage the engagement region of the wings 230 to the chassis slot 1530 to establish an engaged position to resist removal of the clip 20 and grommet 30 from the vehicle chassis 1520.

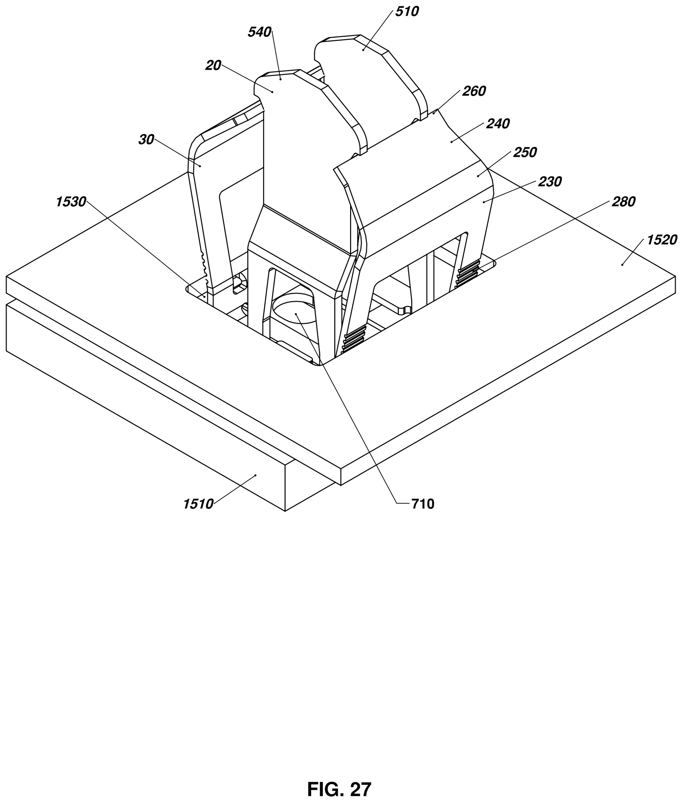

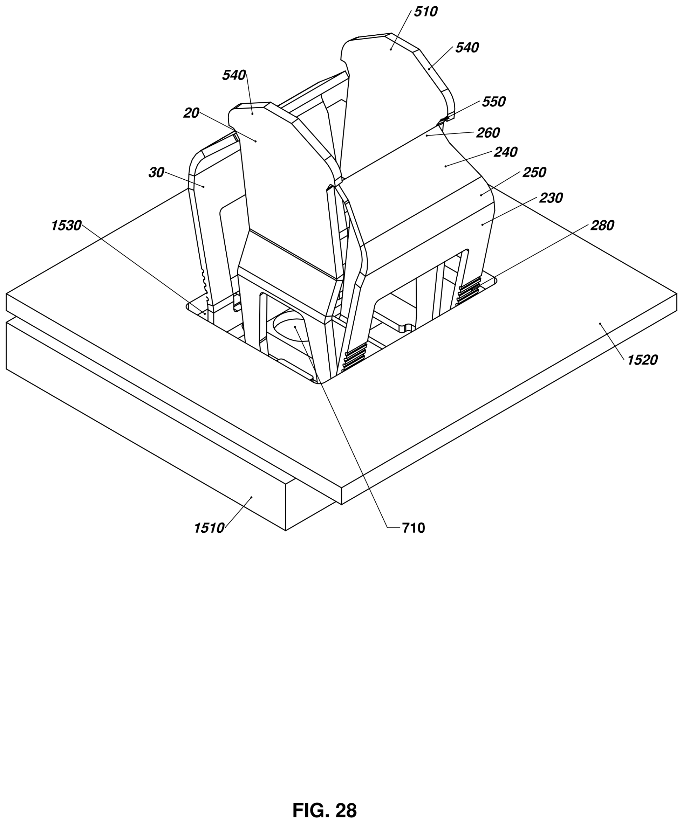

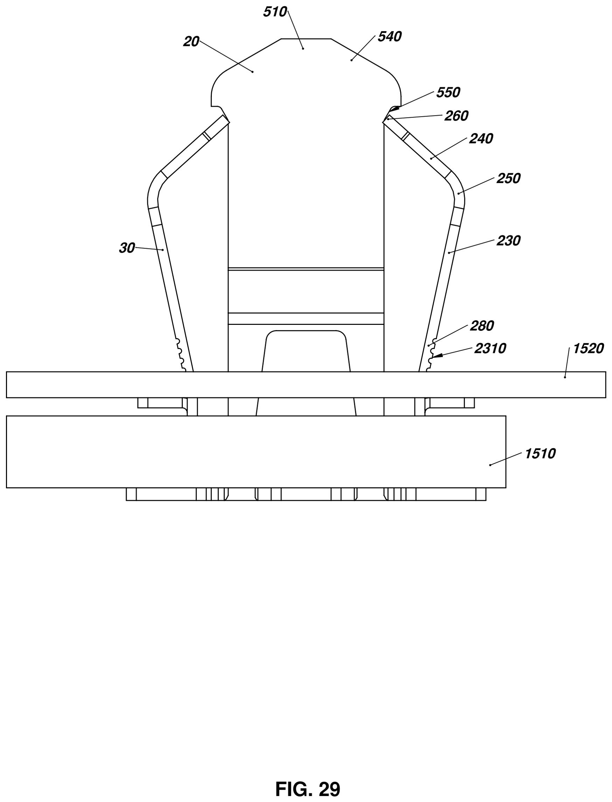

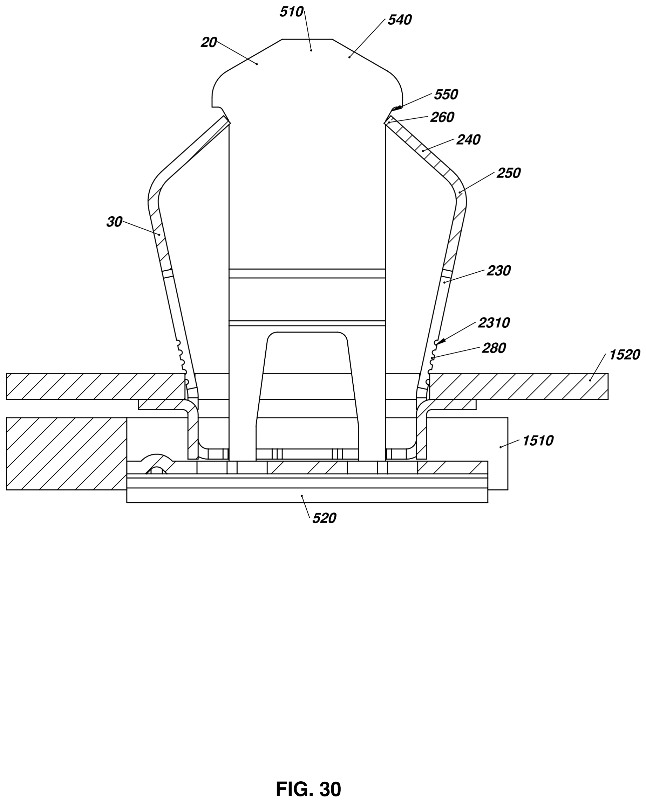

Figs. 27, 28, 29 and 30 illustrate the fastener clip in a stage 2 and in a position as the shoulder 550 engages the wing tips 260 and the wings 230 engage the chassis slot 1530 according to one embodiment. The engagement region 270 includes a plurality of ripples 280 to allow the wing 230 on the grommet 30 to engage a plurality of chassis thicknesses by clamping the chassis 1520 between the paddle 420 and the plurality of ripples 280 corresponding to a chassis thickness.

As the grommet 30 is inserted into the chassis slot 1530 and the paddle 420 engages the inside surface 1710 of the chassis slot 1530, such that opposite plurality of ripples 280 on the wings 230 engage corresponding inside slot edges 1540 of the chassis slot 1530 according to a thickness of the vehicle chassis 1520, wherein a ripple portion 2310 above the chassis slot 1530 flexes at a flex point 2510 [fulcrum], and overhangs and engages an upper inside slot edge 2610 thus resisting withdrawal of the wing 230 resulting in a high retention engagement of the clip 20 and grommet 30 in the chassis slot 1530. The engagement region 270 includes a plurality of ripples 280 to allow the wing 230 on the grommet 30 to engage a plurality of chassis thicknesses 1610 by clamping the vehicle chassis 1520 between the paddle 420 and a ripple 820 corresponding to a chassis thickness 1610.

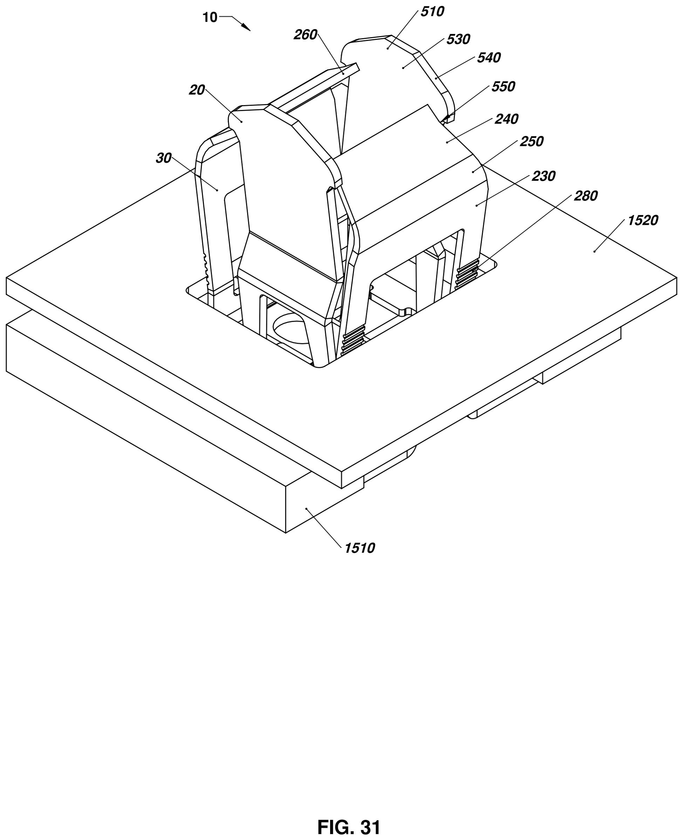

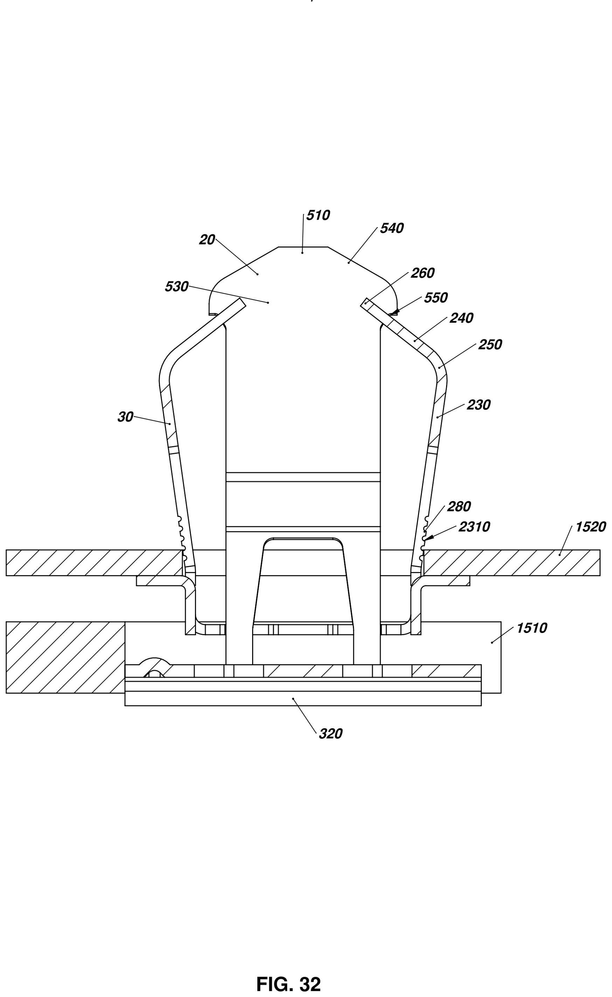

Figs. 31 and 32 of the fastener clip 10 in a stage 2 and in an engaged position with the chassis slot according to one embodiment. As an extraction force is applied to the clip 20 the engagement region 270 of the wing 230 on the grommet 30 further engages the engagement region 270 of the wing 230 on the grommet 30 to an inside edge of the chassis slot to an upper inside slot edge 2610 of the chassis slot 1530. The wings 230 resist flexing apart outwardly thereby causing the ripple portion 2310 on the wings 21 above the slot 1530 to flex outwardly. The extraction force further drives the wing tips 260 into the shoulder 550 increasing the extraction force of the clip 20 and grommet 30 with the vehicle chassis 1520.

### REMOVAL

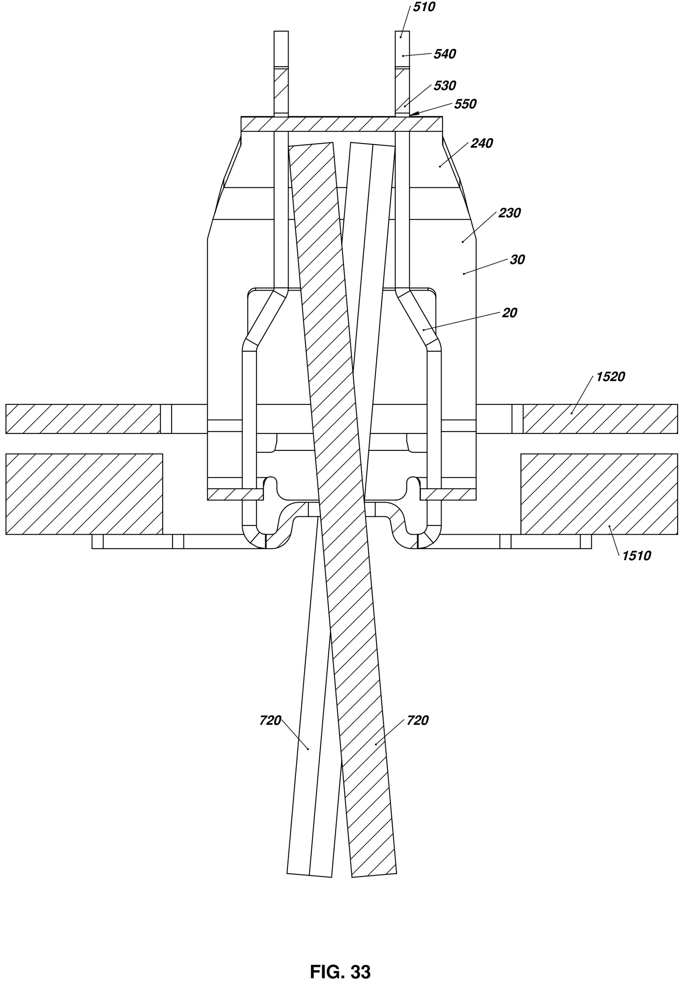

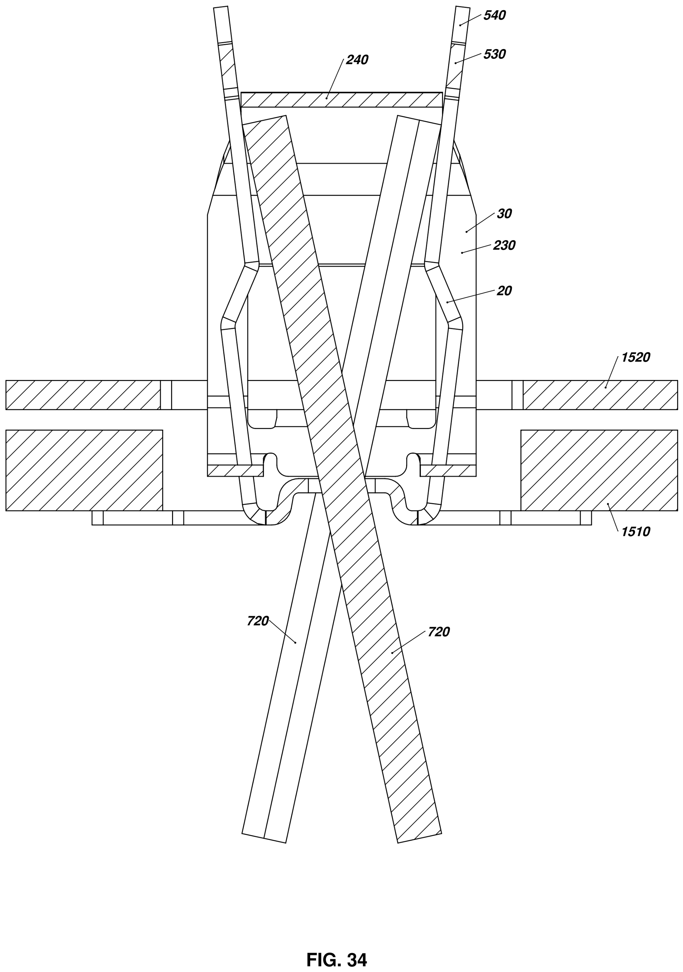

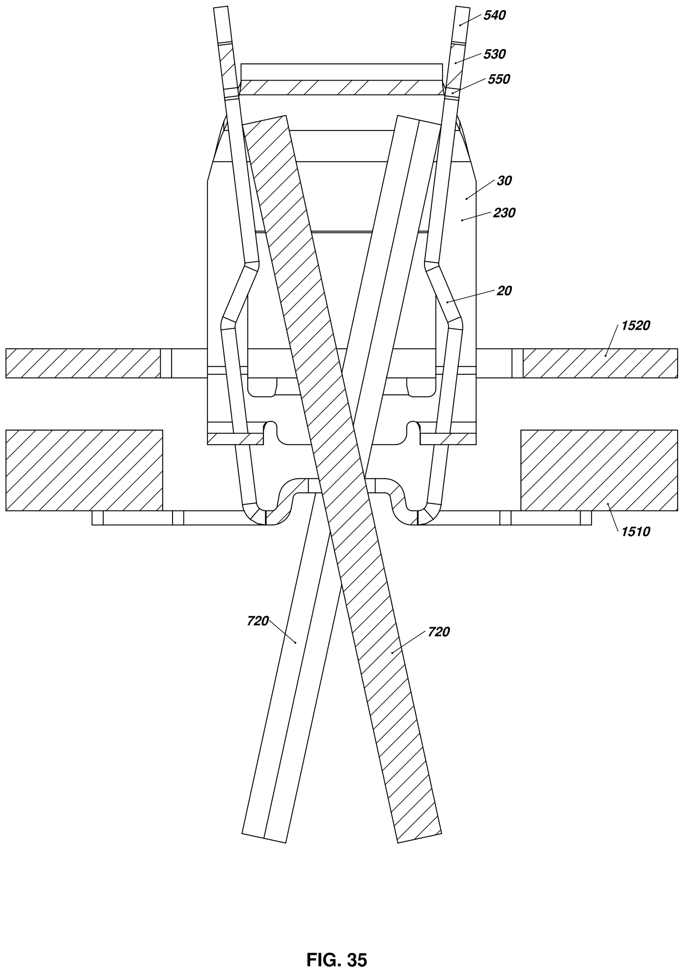

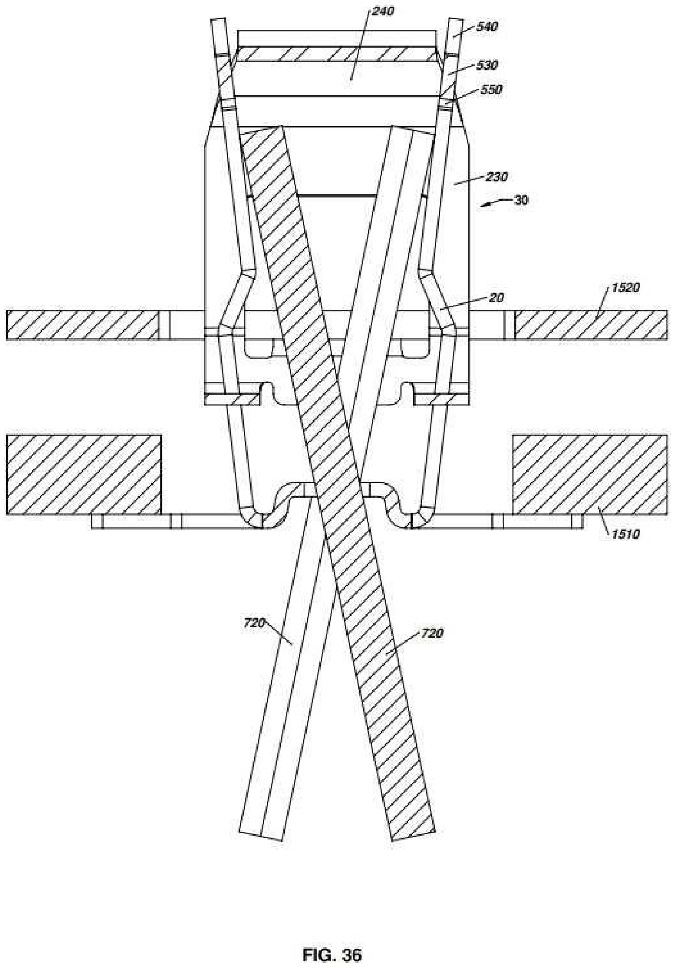

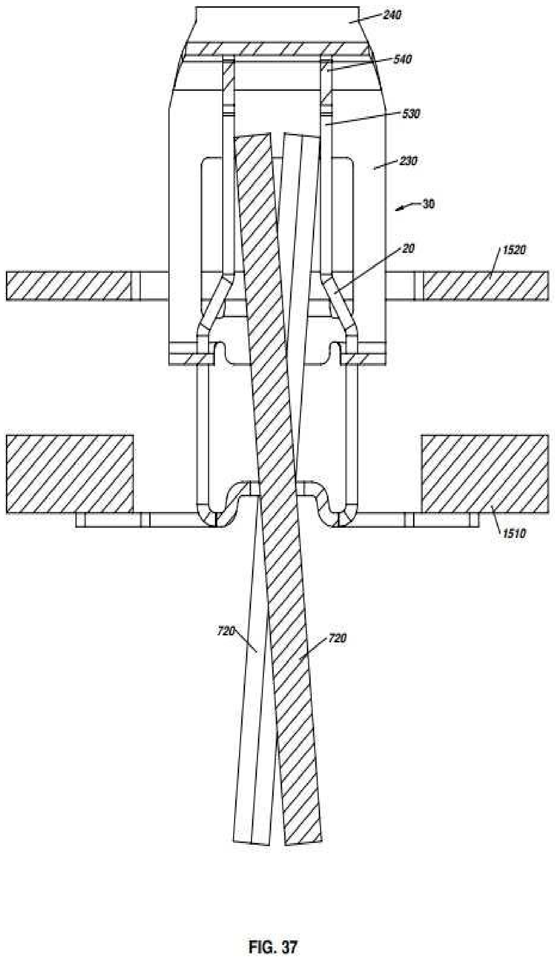

Figs 33, 34, 35, 36, and 37 illustrate the fastener clip 10 in a removal process from the stage 2 to stage 1. The clip base 520 further includes at least one access hole 710. To remove the clip 20, insert one or more removal tools 720 into the access hole 710. According to one embodiment as shown in Fig 33, two removal tools 720 are inserted into respective access holes 710 in order to engage the two laterally spaced apart parallel walls 530 of the clip 20 and to spread them open. As shown in Fig. 34, the two laterally spaced apart parallel walls 530 of the clip 20 spread open in order to clear the fingers 240 of grommet 30 to begin the process of transiting from stage 2 to stage 1. As shown in Fig. 35 while the walls 530 and shoulders 550 then pass through and clear fingers 240, the clip 20 may be pulled out of the grommet 30 by pulling on the removal tool(s) 720 and/or pulling on the body panel 1130 or housing 1510. As shown in Fig. 36 the pulling motion may be performed by pulling on both the removal tool(s) 720 and the body panel 1130 while continuing to spread the walls 530. Once the shoulders 550 clear the wing tips 260 as shown in Fig. 37, the walls 530 are inside the grommet 30 in the stage 1 position. The removal tool(s) 720 may retract from spreading walls 530 and the body panel 1130 and clip 20 may be pulled from the vehicle chassis 1520 completing removal.

The removal tool(s) 720 engages the fingers 240 to spread them apart and allow the shoulder 550 to clear the fingers 240. This removal embodiment is possible as the fingers 240 can flex when engaged in the chassis 1520. The ramp portion 540 pass by the tapered fingers 250 resulting in the fingers 240 springing inwardly such that the wings 230 also spring inwardly. Since the ramp portion 540 no longer engages the tapered fingers 250, the springing force between the chassis slot 1530 and the engagement region 270 is reduced such that the grommet 30 is removed from the chassis slot 1530 with little or no extraction force. According to one embodiment, a single removal tool 720 may disengage one wall 530 at a time from clear finger 240.

Among other advantages, there is substantially no play between the body panel and housing 1510 and the chassis slot 1530.

In some aspects, the techniques described herein relate to a detachable automotive fastener clip wherein the clip 20 and the grommet 30 are made of at least one of: metal, thermoplastic material, rubber, plastisol, plastic, acetal, polyacetal, polyoxymethylene, nylon, fiber glass, and carbon fiber. The clip 20 and grommet 30 may stamped from sheet steel together or may be separately stamped.

The fastener clip 10 has a high level of extraction force yet securely and relatively easily facilitates attachment, detachment and reattachment of a body panel 1130, such as an interior or exterior body panel with the first engagement structure such as the vehicle chassis 1520. The fastener clip 10 is suitable for use in applications requiring attachment and reattachment and thus may be reused. The fastener clip 10 is also suitable for use in various applications such as body panel 1130 mounting, headliners, trunk and hatch liners, and other trim panels. The wings 230 comprise a flex point, such as a width, length, thickness, one or more radius curves and pivot point(s) to provide very high extraction force levels while the insertion force level is relatively low.

The dimensions of the slot 1530 are so precise the wings 230 can bow. Flex point above creates and overhang and will engage the edge of the slot. The flexed wings engaged on the walls in this stage are spread open and sets up the wing portion at the flex point to flex and overhang at the slot edge to provide the high retention engagement in the engaged position. In other words, the flex point acts as a fulcrum because the inside upper edge of the slot engages the flex point preventing the portion of the wing at the flex point from flexing outward. Since the wing flexes just above the slot edge above the flex point, the portion of the wing above the flex point overhangs and effectively hooks the wing at the flex point to the slot resulting in a high retention engagement.

### Screw Embodiment

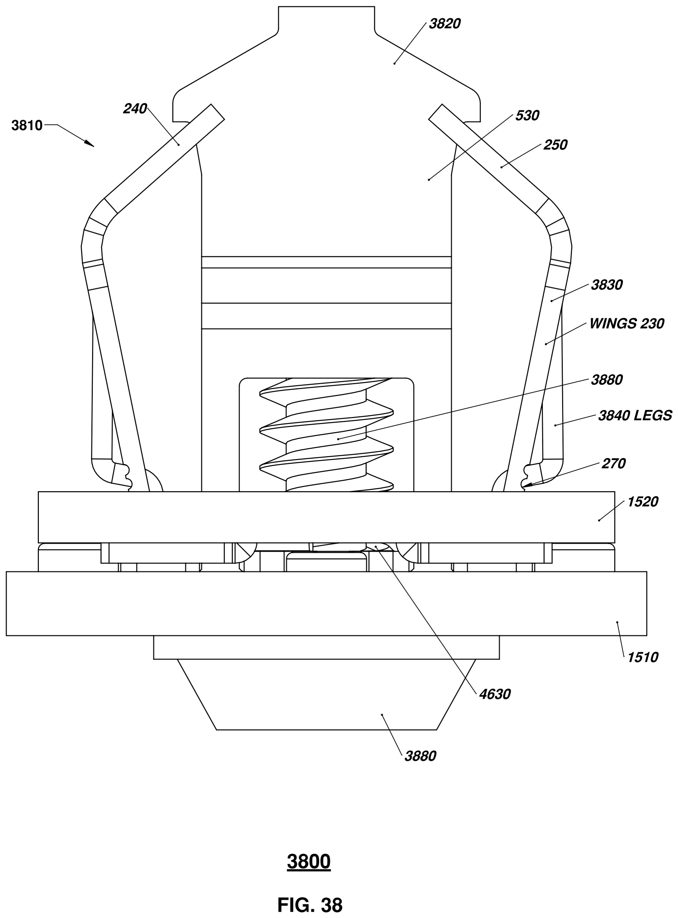

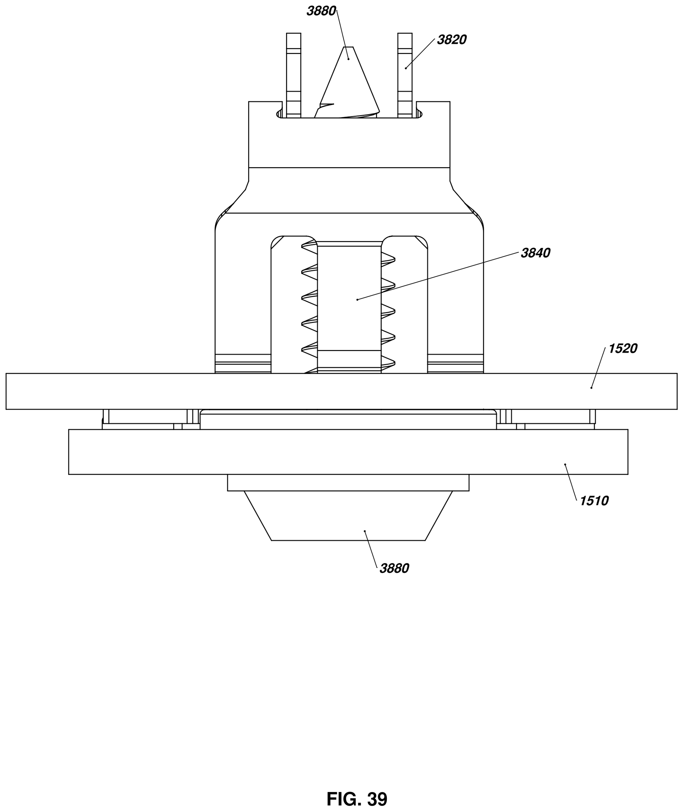

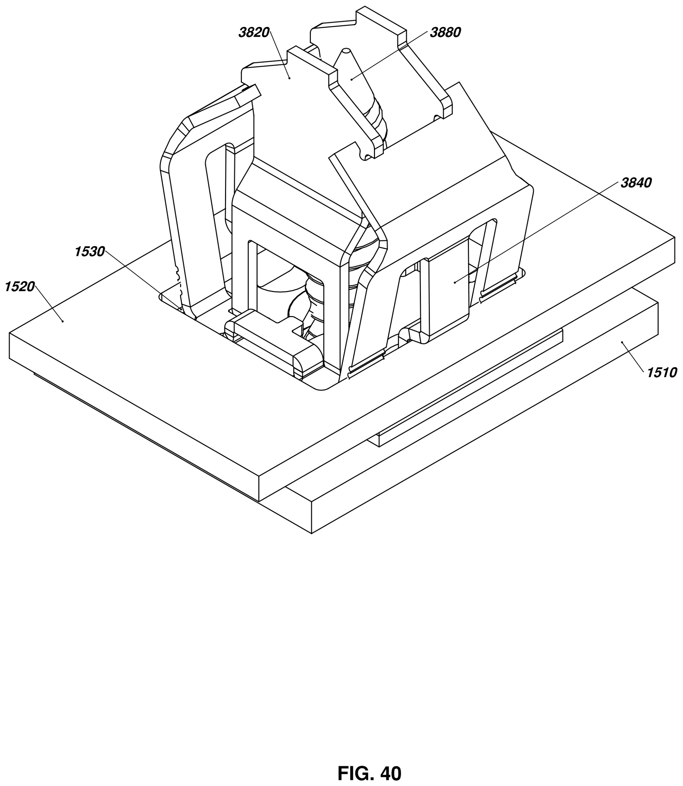

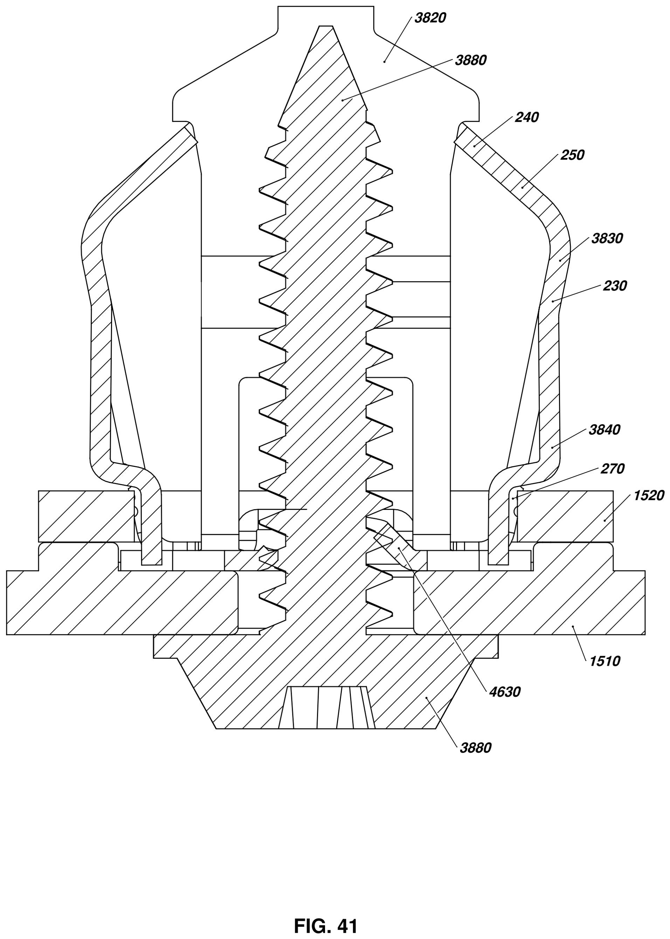

Figs 38, 39, 40, and 41 of a fastener clip 3810 include a clip 3820, grommet 3830 and a screw 3880 according to another embodiment. Fastener clip 3810 may be configured to be inserted into and to attach to a chassis slot/hole 1530 in chassis 1520. A component, such as a trim panel 1510, is configured to be attached to chassis 1500 using a screw 3880 that is screwed into fastener clip 3810. Screw 3880 may be a bolt, rivet or any suitable fastener. The fastener clip 3810 and screw 3880 adapts to different frame 1520 thicknesses and curvatures such that a distance between the engagement regions 270 and the clip base 4620 is operative to vary continuously according to a slot 1530 thicknesses. The screw 3880 further resists walls 530 from springing inward and thus significantly increase the engagement force of the fastener clip 3810.

In some embodiments, grommet 3830 may also include two legs 3840, one on each of wings 230. In some embodiments, legs 3840 are attached at their top portion and extend downward. In some embodiments, legs 3840 are configured to engage a chassis slot 1530 in a surface to which fastener clip 3810 is configured to attach (such as an automobile chassis). Legs 3840 are configured to bend inward as the fastener clip 3810 and grommet 3830 are pushed into the chassis slot 1530 and then spring back outward, thereby engaging the chassis slot 1530. Fastener clip 3810 may also include feet 4640. Feet 4640 are configured to rest against a chassis 1520 to which the clip 3820 engages, providing a stopping point for the clip 3820.

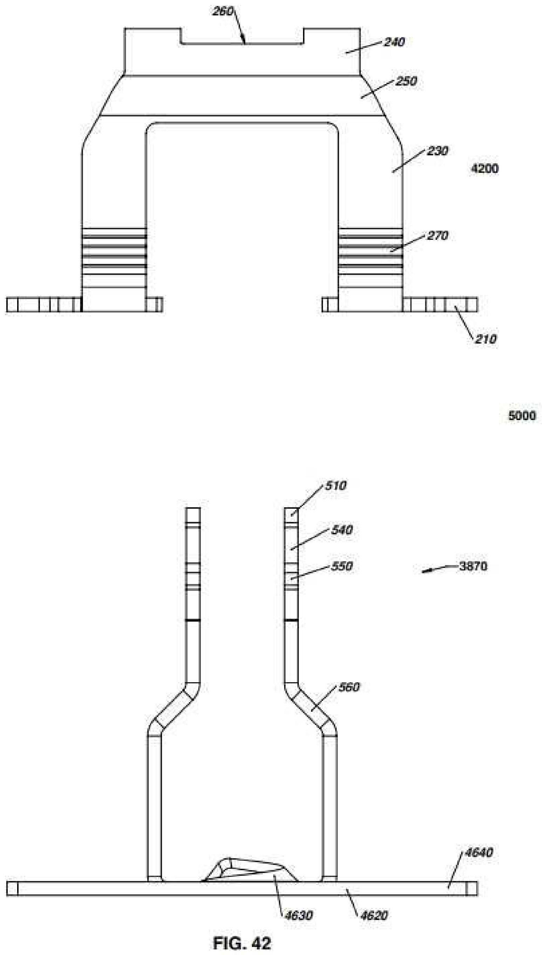

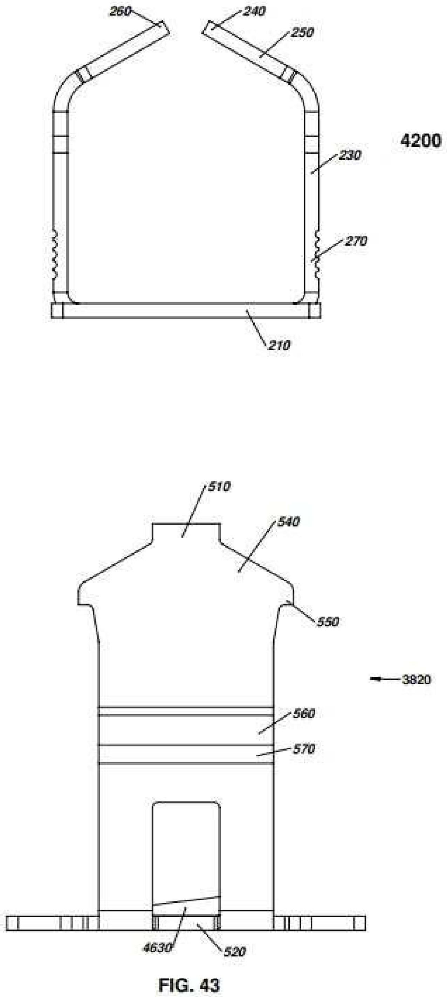

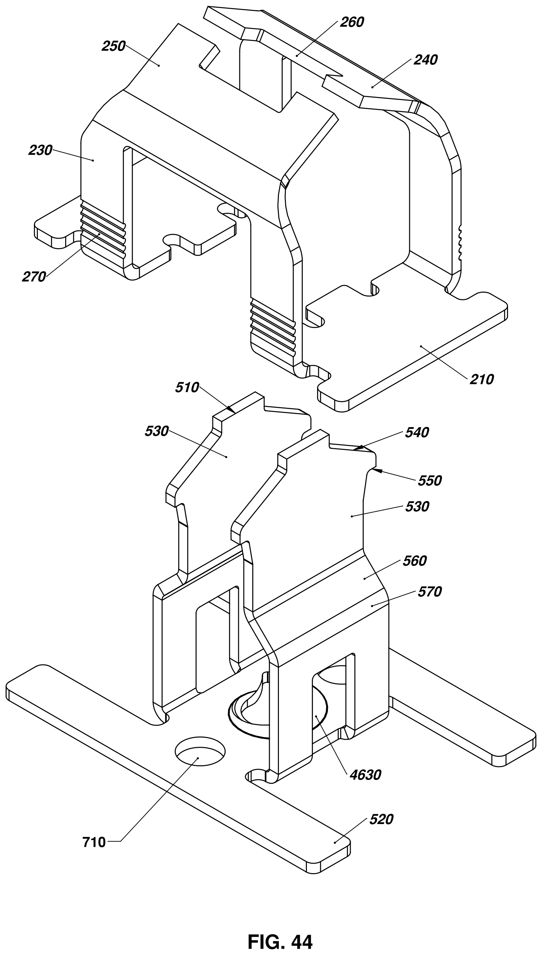

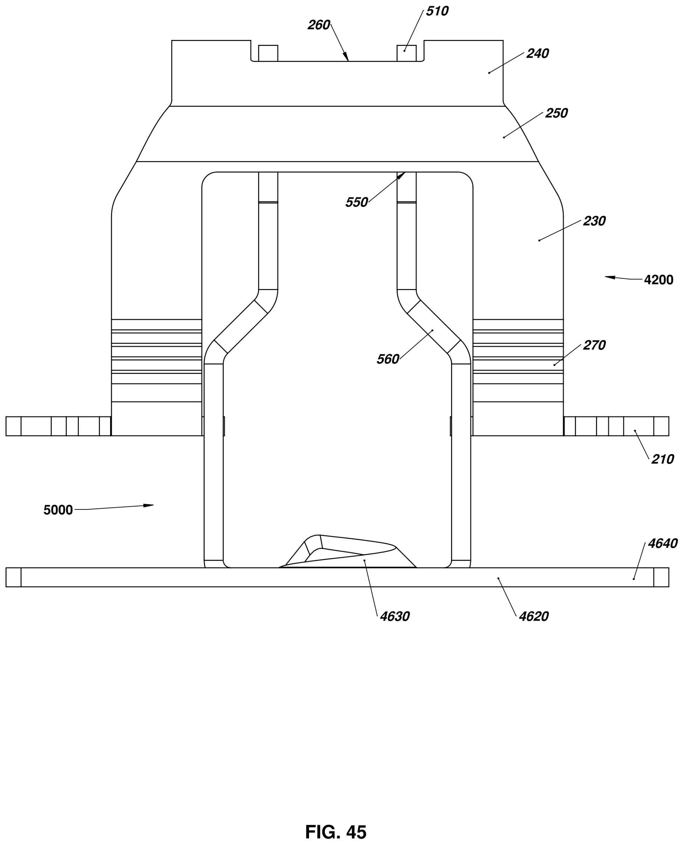

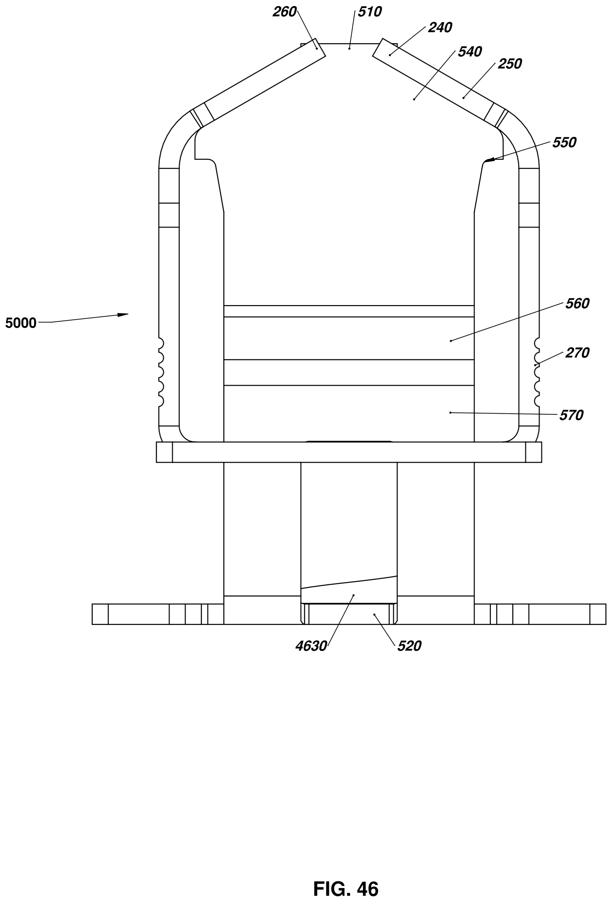

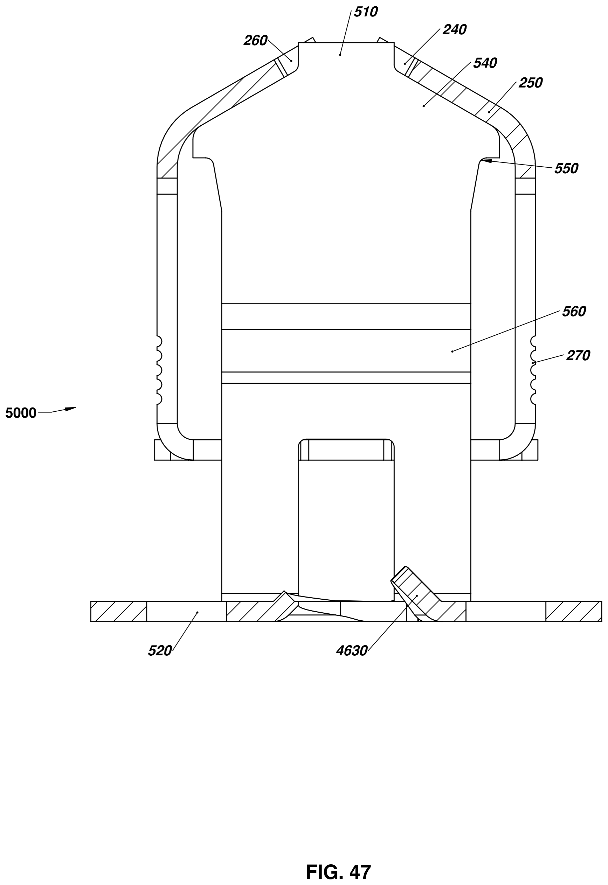

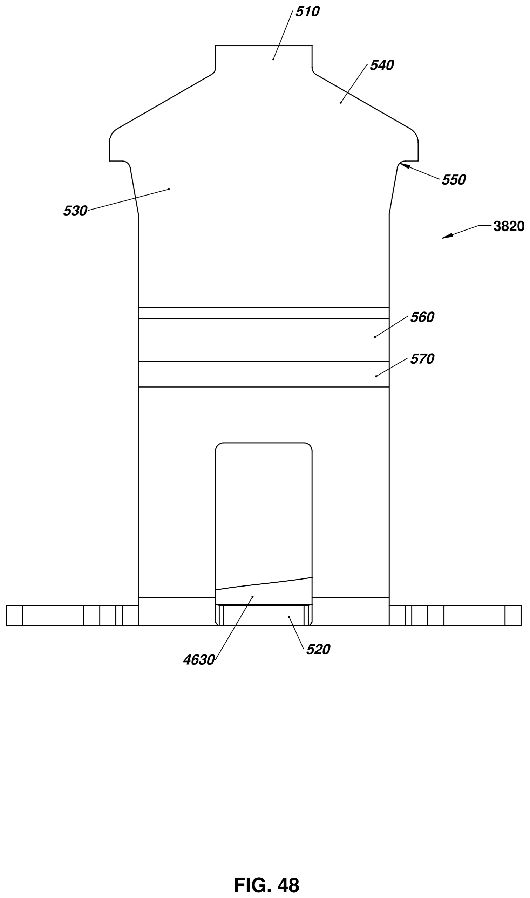

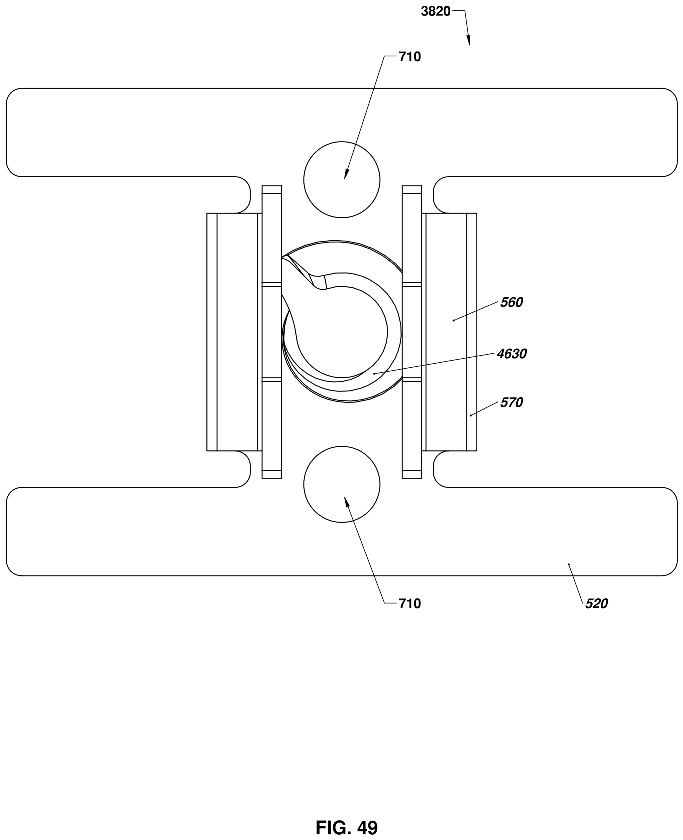

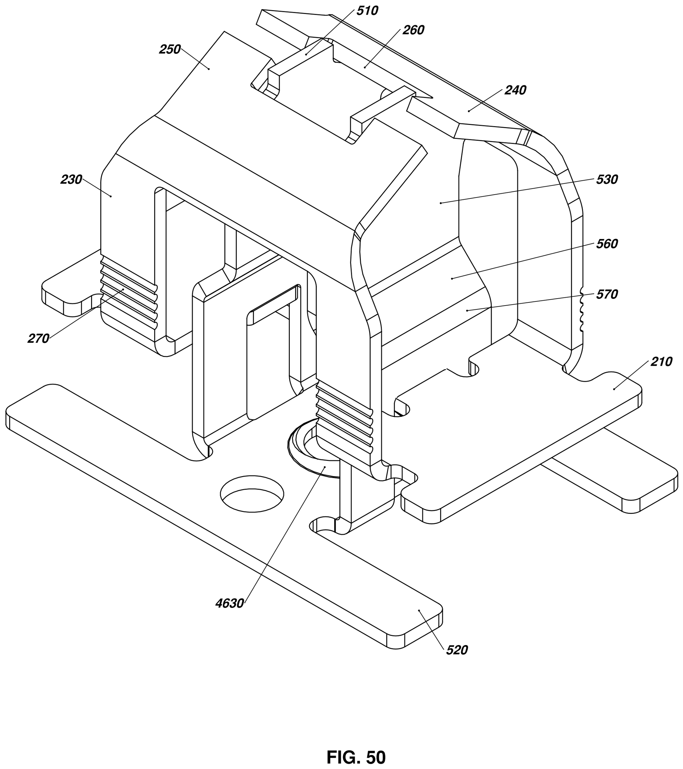

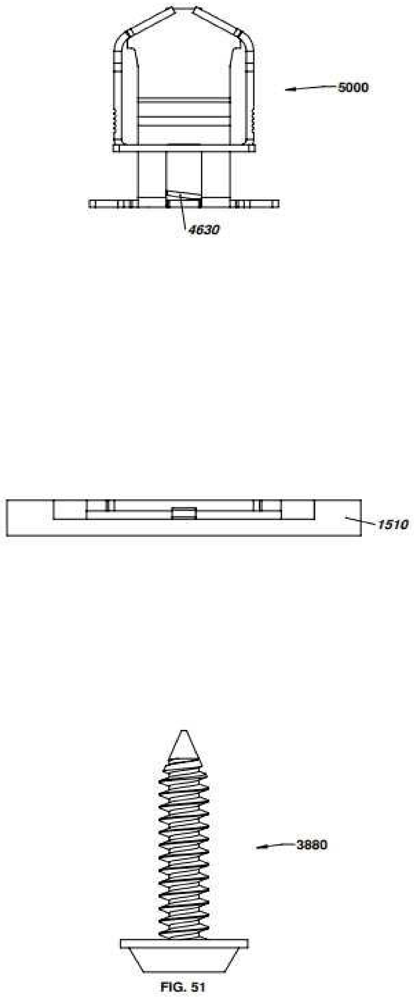

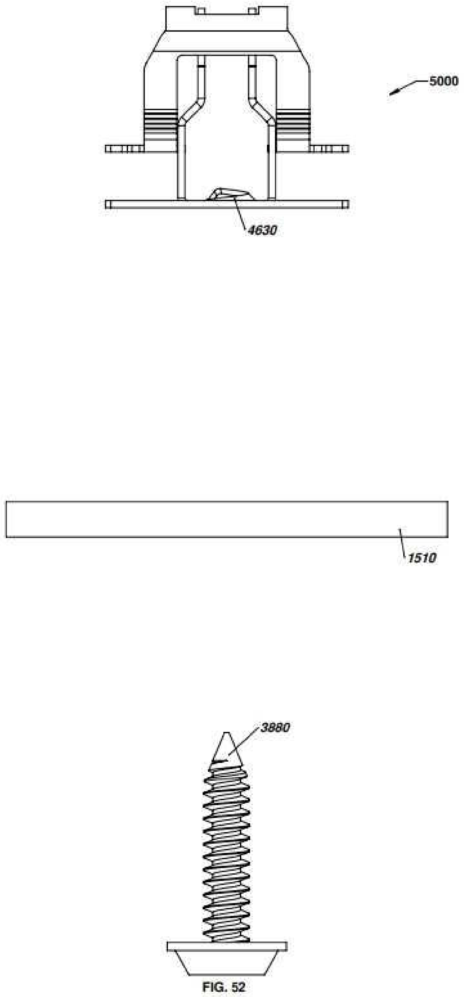

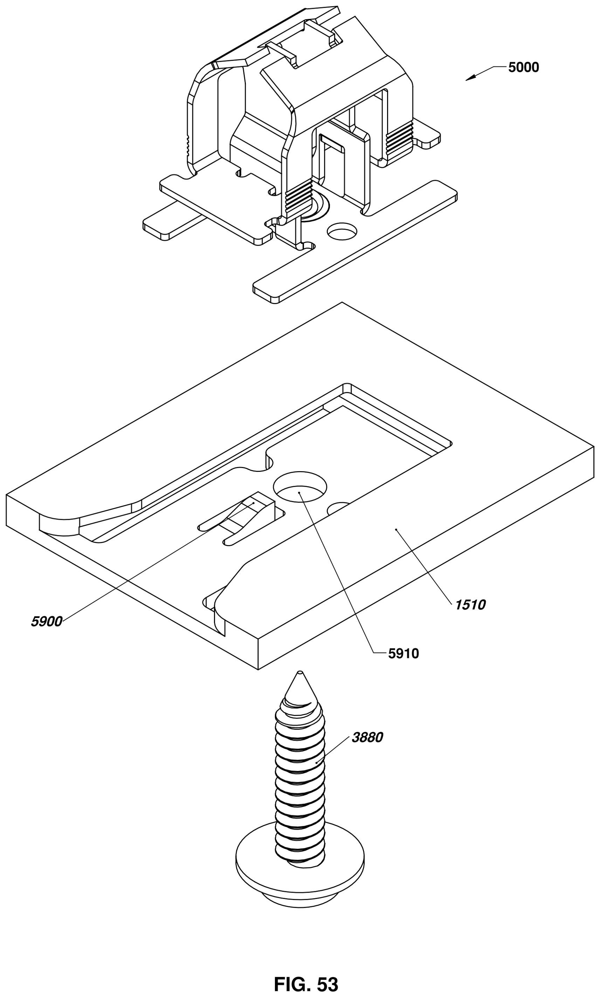

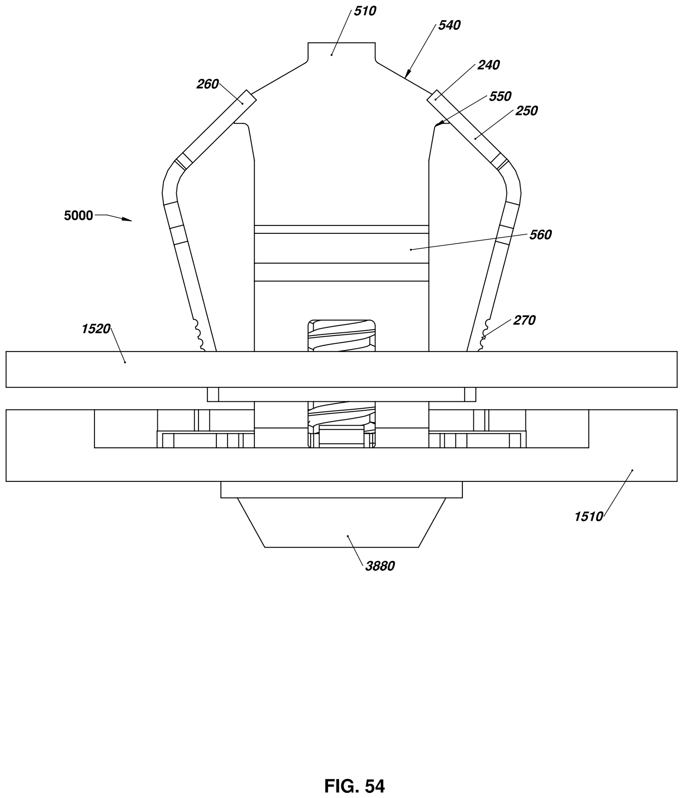

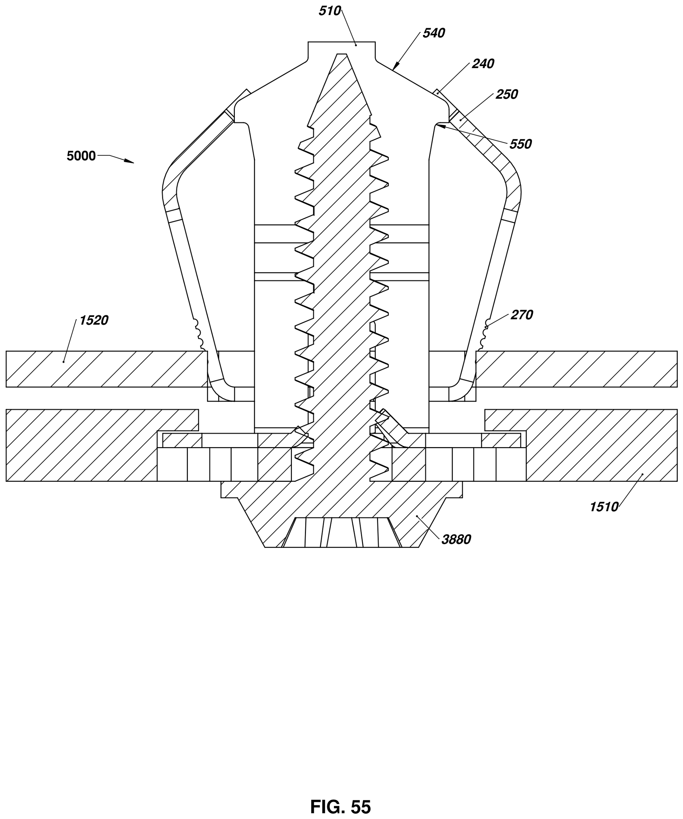

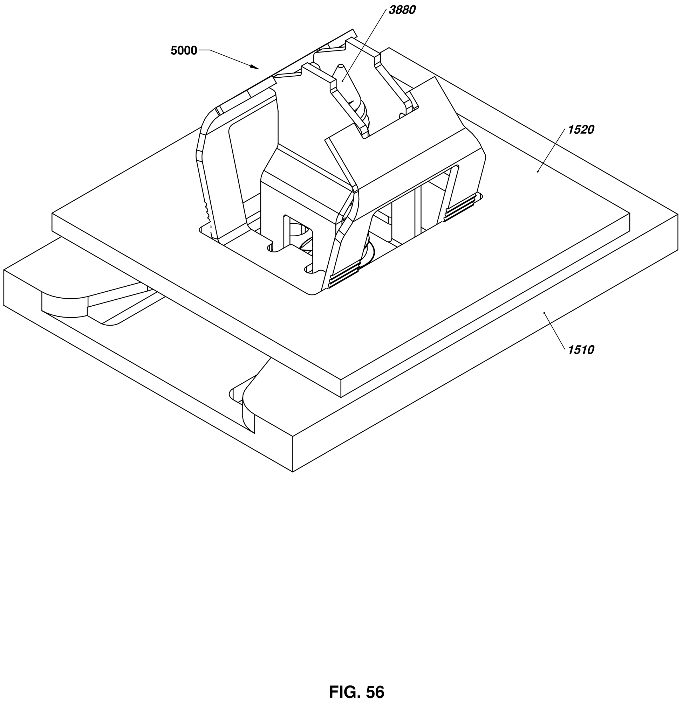

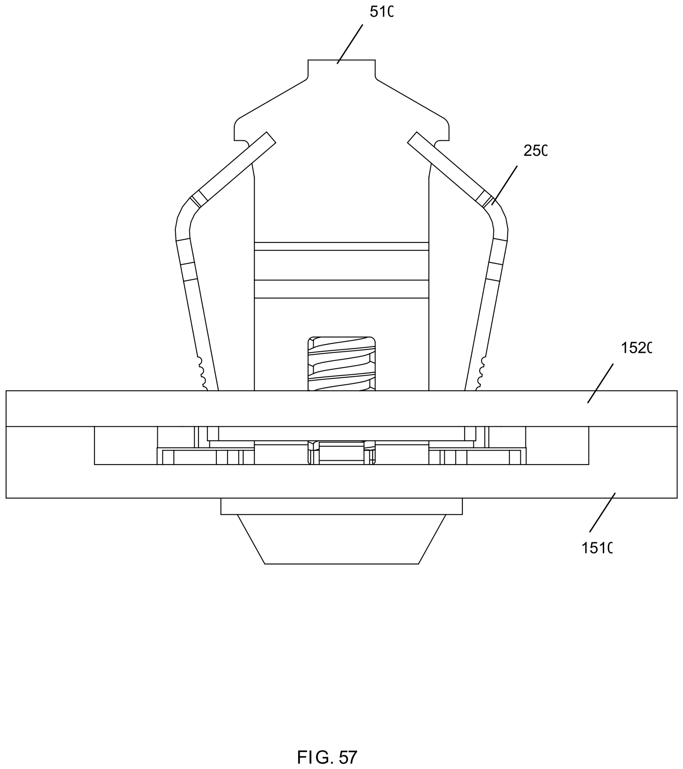

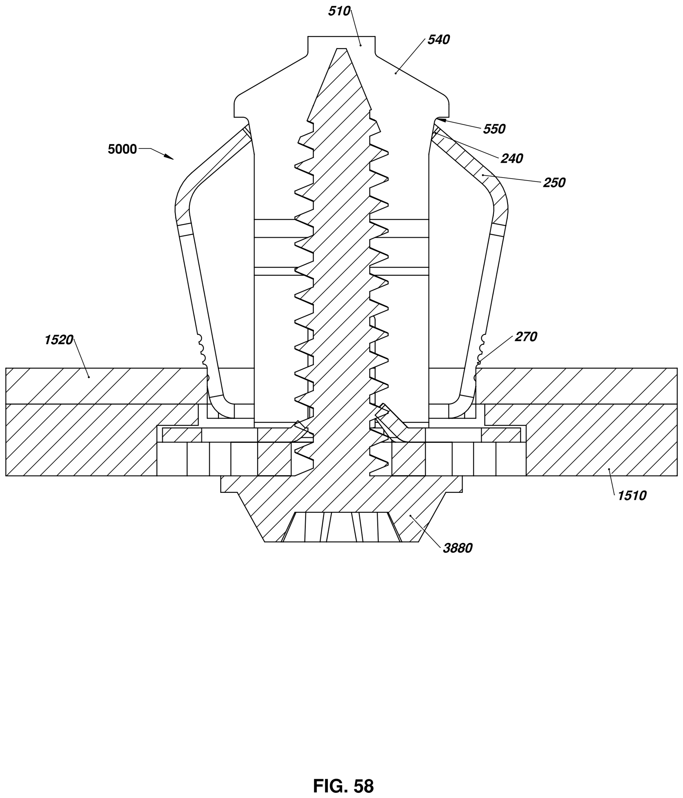

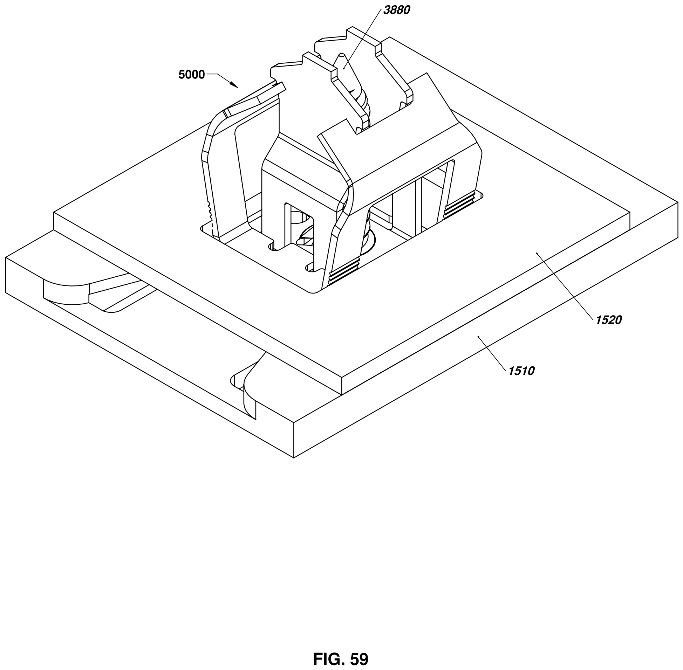

Figs 42 through 59 illustrate the fastener clip 5000, clip 3820, grommet 4200 and the screw 3880.

In some embodiments, each of the clip base 4620 comprise threads 4630, which are configured to receive a screw 3880. In some embodiments, threads (not shown) may also be formed to the base of the grommet 3830, which are also configured to receive a screw3880. In some embodiments, the pitch of all the treads 4630 may be formed based at least upon the positions of the clip base 4620 in order to for a screw 3880 with appropriate threads 4630 to be able to be screwed through the body panel hole 5910 on body panel 1510, through threads 4630 and optionally through the threads at the base of the grommet 3830.

The wings 230 effectively act as a spring stabilized on both ends. Since the wings 230 are in flexed tension when sliding past the engagement region on the wing, the wings snap audibly. This audible snap confirms to the operator that the fastener clip 10 engaged the engagement region so the operator knows that the fastener clip 10 is not in the pre-engagement position but this provides a positive result and confirms is in the engagement position. This prevents body panels from not fully engaging. The operator will hear a loud snap or click to ensure positive engagement and in the positive engagement position. A visual inspection of the body panel to check to confirm that the body panel 1130 is not flush, extending improperly or otherwise not engaged. For example, the operator may check for curves or gaps in the panel 1130 so it will be apparent if the fastener clip 10 is not snapped into the engagement position. The operator may then push the fastener clip 10 in with sufficient force to snap the fastener clip 10. The operator may also test to see if the fastener clip 10 is engaged by pulling on the body panel 1130 with sufficient force according to the design requirements to determine the fastener clip 10 is engaged. For example, if the design requirements specify a retention force of 100 pounds, then the operator may pull on the body panel with 100 pounds of force.

The same fastener clip 10 may be used with variations in production tolerances and different sheet metal thicknesses and curvatures. For example, a vehicle may have different sheet metal thicknesses at various parts of the vehicle. The range of slot thicknesses varies continuously from a minimum thickness to a maximum thickness. For example, the minimum thickness may be 0.25 mm or less and the maximum thickness may be 6.0 mm or more. The fastener clip 10 is operative for insertion into the slot defined in a first engagement structure, such as a vehicle chassis. Since the fastener clip 10 adapts automatically to different sheet metal thicknesses and curvatures, the same fastener clip may be used throughout the vehicle thus eliminating the need for specific fastener clips for specific slot thicknesses.

The engagement portion also automatically adapts to different angles and variations of curvature or movement of slot, and sheet metal thicknesses, such as variations in the thickness of various portions of the vehicle chassis and variations in body panels to maintain a high level of extraction force relative to the insertion force. For example, during engagement the engagement portion continuously adapts to variations in thickness, curvature, slot thickness and shape, slot rim thickness and shape and dimensions of the vehicle chassis and/or in the body panel and other variations. According to one embodiment, only a single type or style of fastener clip need be used with a vehicle or application even if the thickness of the sheet metal varies or if the sheet metal moves or curves. According to one embodiment, each wing independently engages the slot of the vehicle chassis in a continuous rather than discrete manner. Further, each wing adapts to changes, such as chassis flexing, vibrations and thermal expansion of a wide range of amplitudes and frequencies, and other conditions. For example, the fastener clip may adapt to changes in thermal expansion, especially due to the differences in thermal expansion rates between dissimilar metals or metal to plastic with respect to the vehicle chassis components and/or between plastic components such as the interior trim panels attached to the metal vehicle chassis. The fastener clip may also fasten to plastic and/or metal engagement structures. The fastener clip and retainer 40 may be made of anticorrosive material such as brass, stainless steel, galvanized steel or treated metal to provide long reliable service life.

According to one embodiment, in a high retention or heavy-duty automotive applications the removal force is 10 to 40 % of the retention force such as 10, 20, 30, 40, 50 pounds or any force suitable for the application. Depending on the particular design, the retention and removal forces may be significantly higher or lower depending on the requirements. For example, for even higher retention force applications the removal force may be several hundred or thousands of pounds and the removal force may be a fraction of this force. For lighter duty applications, the retention may be a few or a fraction of a pound. The dimensions for the clip may be selected based on the required: set up height, slot size, retention and removal force, size shape and type of retainer 40. An entire family of clips may be designed for a wide range of applications from the smallest application to the largest according to the various functions described. In other words, the functions described may be scaled up and down.

According to an alternative embodiment, the wing tip shape may be pointed at any suitable angle, rounded according to any suitable radius, oval, multi tipped, rhombus or any suitable shape. Accordingly, the interference notch and removal ramp may have any suitable shape and size corresponding the shape and size of the wing tip. For example, if a higher retention or removal force is required then the shapes may be selected to provide more surface area contact and more engagement. The angle and shape of the interference notch and removal ramp may thus be selected to provide the appropriate engagement force when in the high retention stage, yet provide the appropriate removal force as the wing tip slides along the removal ramp to facilitate ergonomic removal. In the event the fastener clip 10 is not in the high retention stage, the fastener clip 10 will simply fall out indicating to the operator that the fastener clip 10 is not engaged and to ensure the fastener clip 10 is properly inserted and engaged. Wing tips 260 if optionally pointed must be pointed enough to allow withdrawal. According to one embodiment, wing tips have a radius and an interference notch greater than 90 degrees to allow wing tip to ride along the upper notch although any suitable radius or interference notch.

Further, the retainer 40 size, shape, length, width and hardness may all be selected as a matter of design choice to strengthen the fastener clip 10 walls and the corresponding attached interference notch, engagement and removal ramps.

Yet another advantage is that the fastener clip 10 is relatively easy to manufacture using relatively inexpensive manufacturing processes and materials. A plastic design is especially inexpensive compared to conventional designs. The use of the fastener clip 10 decreases production costs, increases worker productivity and efficiency and decreases overall vehicle assembly costs. The fastener clip 10 exhibits little or no play and also dampens vibrations and thus eliminates or substantially reduces buzz, squeak and rattles. The fastener clip securely attaches and adapts any suitable body panel to the vehicle chassis, such that the fastener clip improves reliability both in the short term and in the long term, while further improving vehicle safety and quality.

In some aspects, the techniques described herein relate to a detachable automotive fastener clip wherein there is substantially no play between the body panel and the chassis slot.

According to one embodiment, the clip 20 and or grommet 30 is made of: plastic, acetal, polyacetal, polyoxymethylene, nylon, fiberglass, Acrylonitrile butadiene styrene (ABS), and/or carbon fiber, however any suitable material may be used in any combination such as steel, tin and/or any suitable metal. According to another embodiment, the fastener clip 10 is made of: steel, tin aluminum, magnesium, copper, carbon fiber or any suitable metal or alloy. According to an alternative embodiment, a coating is applied on the fastener clip 10 made of at least one of: nickel plating, zinc plating, foam, rubber, plastisol, plastic, acetal, polyacetal, polyoxymethylene, nylon, fiberglass and/or carbon fiber to suitably provide corrosion resistance and to reduce NVH and rattling.

The body panel 1130, such as a pull handle, overhead control panel, door panel, visor bracket and headliner, may be constructed from plastic or from any suitable material such as wood, steel, aluminum, magnesium, wood, plastic, fiber glass, carbon fiber or any suitable material.

Many vehicles now include side curtain air bags, which are mounted optionally in the body panel or in the area above and adjacent the panel for example. However, for such a configuration there is the possibility that the body panel could be in a position causing the air bag to be blocked or otherwise block or interfere with operation of the airbag. The panel assembly 1200 prevents or reduces such blocking or interference with the air bag and otherwise withstands or directs the force of air bag deployment. For example, the fastener 10 may provide sufficient extraction force to prevent or reduce disengagement during deployment of the air bag. As a result, fastener 10 may replace screws or other fasteners for fastening the panel assembly 1200 to the chassis 1520 to provide the requisite high level of extraction force while significantly reducing assembly and servicing time and cost.

According to one embodiment, a two-piece mold is used to produce the clip 20 and grommet 30, although any suitable number of molds may be used. Clip 20, grommet 30, retainer 40 or any combination of components may be made from: Polypropylene, glass fill, acetal, plastic, vinyl, rubber, plastisol, plastic, acetal, polyacetal, polyoxymethylene, nylon, any suitable polymeric material, polycarbonate, thermoplastic resin, fiberglass and carbon fiber and Acrylonitrile butadiene styrene (ABS), or any suitable material and combination thereof suitable for injection molding.

**It** is understood that the implementation of other variations and modifications of the present invention in its various aspects will be apparent to those of ordinary skill in the art and that the invention is not limited by the specific embodiments described. For example, the geometry can change as a matter of design choice. The functionality would be similar. Thus the dimensions can scale up and scale down. For example, different ratios of width to depth can be appropriate. It is therefore contemplated to cover by the present invention any and all modifications, variations or equivalents that fall within the spirit and scope of the basic underlying principles disclosed and claimed herein.

## Claims

1. A detachable automotive fastener clip for attachment of a body panel to a chassis, comprising:
a grommet to removably attach to a chassis slot, the grommet comprising;
a grommet base having an opening:
at least two wings laterally spaced apart on opposite sides of the grommet base;
fingers at an end of the at least two wings opposite the grommet base;
a wing tip at the end of each of the at least two wings; and
an engagement region formed on the at least two wings between the grommet base and the fingers to engage and detach with the chassis slot; and
a clip to removably attach to the grommet, the clip having a head at one end of the clip, the clip comprising:
a clip base at an opposite end of the head;
two laterally spaced apart parallel walls extending from the clip base;
ramp portions formed on the head of each wall on the end opposite the clip base;
a shoulder formed on the two laterally spaced apart parallel walls in the head; and
a taper formed on the two laterally spaced apart parallel walls between the head and the clip base;
wherein as the clip is inserted into the opening, the shoulder slides past the fingers and engage the wing tip at the end of each of the at least two wings.

2. The detachable automotive fastener clip of claim 1, wherein as the ramp portions of the clip are inserted into the opening at a first stage, the ramp portions slide past the fingers, such that the fingers spread apart and snap together as the wing tip engages the shoulder at a second stage.

3. The detachable automotive fastener clip of claim **1,** the clip further comprising:
at least one taper ledge at the end of the taper; and
a tab inwardly facing on opposing sides of the grommet base, such that the tab engages the at least one taper ledge to resist removal of the clip from the grommet at a first stage, and the two laterally spaced apart parallel walls spring inwardly to disengage the at least one taper ledge from the tab to facilitate removal of the clip from the grommet.

4. The detachable automotive fastener clip of claim 1, further comprising:
a chassis having a chassis slot and slot edges; and
a tapered finger on the fingers between each wing tip and each wing;
wherein as the clip and the grommet are inserted into the chassis slot, the ramp portions slide past an inside surface of the tapered finger while an outside surface of the tapered finger guides insertion of the grommet through the slot edges into the chassis slot.

5. The detachable automotive fastener clip of claim 4, further comprising:
a paddle formed on the at least two wings adjacent to the grommet base wherein the paddle engages an inside surface of the chassis slot to resist further insertion of the grommet into the chassis slot.

6. The detachable automotive fastener clip of claim 5, further comprising:
wherein as the clip is further inserted into the grommet, the shoulder slides past the tapered finger such that the at least two wings spread apart outwardly and the engagement region engages the slot edges.

7. The detachable automotive fastener clip of claim 5 such that as the paddle engages the chassis slot, the clip continues insertion into the grommet and the ramp portions spread the fingers, and the wing tip flexes outwardly upon sliding past the ramp portions to snap into the shoulder maintaining a springing force between the at least two wings and to further engage the engagement region of the at least two wings to the chassis slot to establish an engaged position and to resist removal of the clip and grommet from the chassis.

8. The detachable automotive fastener clip of claim 5, wherein the engagement region includes at least one ripple, the grommet is inserted into the chassis slot and the paddle engages the inside surface of the chassis slot, such that opposite ripples on the at least two wings engage corresponding inside edges of the chassis slot according to a thickness of the chassis, wherein a ripple portion above the chassis slot flexes at a flex point, and overhangs and engages an upper inside slot edge thus resisting withdrawal of the at least two wings resulting in a high retention engagement of the clip and the grommet in the chassis slot.

9. The detachable automotive fastener clip of claim 5, wherein the engagement region includes a plurality of ripples to allow the at least two wings on the grommet to engage at least one of a plurality of chassis thicknesses by clamping the chassis between the paddle and a ripple corresponding to a chassis thickness.

10. The detachable automotive fastener clip of claim 1, wherein as an extraction force is applied to the clip:
further engaging the engagement region of the at least two wings on the grommet to an inside edge of the chassis slot;
resisting the at least two wings from flexing apart outwardly thereby causing a wing portion above the chassis slot to flex outwardly;
driving the wing tip into the shoulder; and
increasing the extraction force of the clip and grommet.

11. The detachable automotive fastener clip of claim 1 comprising:
at least one access hole formed in the clip base:
inserting a removal tool into the at least one access hole;
engaging the removal tool and the fingers to spread them apart and allow the shoulder to clear the fingers;
passing the ramp portions by the fingers causing the fingers and the at least two wings to spring inwardly; and
reducing a springing force between the chassis slot and the engagement region at a set up height such that the grommet is removed from the chassis slot.

12. The detachable automotive fastener clip of claim 1 wherein there is substantially no play between the body panel and the chassis slot.

13. The detachable automotive fastener clip of claim 1 wherein the clip and the grommet are stamped.

14. The detachable automotive fastener clip of claim 1 wherein the clip and the grommet are made from at least one of: metal, thermoplastic material, rubber, plastisol, plastic, acetal, polyacetal, polyoxymethylene, nylon, fiber glass, and carbon fiber.

15. A fastener assembly comprising:
a body panel comprising a housing; and
a detachable automotive fastener clip for attachment of the body panel to a chassis slot, comprising:
a grommet to removably attach to the chassis slot, the grommet comprising;
a grommet base having an opening:
at least two wings on opposite ends of the grommet base;
fingers at an end of the at least two wings opposite the grommet base;
a wing tip at the end of each of the at least two wings; and
an engagement region formed on the at least two wings between the grommet base and the fingers to engage and detach with the chassis slot; and
a clip to removably attach to the grommet, the clip having a head at one end of the clip, the clip comprising:
a clip base at an opposite end of the head such that the clip base engages the housing;
two laterally spaced apart parallel walls extending from the clip base;
ramp portions formed on the head of each wall on the end opposite the clip base;
a shoulder formed on the two laterally spaced apart parallel walls in the head; and
a taper formed on the two laterally spaced apart parallel walls between the head and the clip base;
wherein as the clip is inserted into the opening, so that the shoulder formed on the two laterally spaced apart parallel walls slides past the fingers and engage the wing tip at the end of each of the at least two wings

16. The fastener assembly of claim 15, further comprising clip legs on the clip base wherein the housing has an opening such that the clip legs removably engage the housing.

17. The fastener assembly of claim 15, wherein as the ramp portions of the clip are inserted into the opening at a first stage, the ramp portions slide past the fingers, such that the fingers spread apart and snap together as the wing tip engages the shoulder at a second stage.

18. The fastener assembly of claim 15 further comprising:
at least one taper ledge at the end of the taper; and
a tab inwardly facing on opposing sides of the grommet base, such that the tab engages the at least one taper ledge to resist removal of the clip from the grommet at a first stage, and the two laterally spaced apart parallel walls spring inwardly to disengage the at least one taper ledge from the tab to facilitate removal of the clip from the grommet.

19. The fastener assembly of claim 15 further comprising:
a chassis having a chassis slot and slot edges; and
a tapered finger on the fingers between the wing tip and the at least two wings;
wherein as the clip and the grommet are inserted into the chassis slot, the ramp portions slide past an inside surface of the tapered finger while an outside surface of the tapered finger guides insertion of the grommet through the slot edges into the chassis slot.

20. A vehicle comprising:
a vehicle chassis having a slot;
a body panel comprising a housing; and
a detachable automotive fastener clip for attachment of the body panel to the slot, comprising:
a grommet comprising;
a grommet base having an opening:
at least two wings on opposite ends of the grommet base;
fingers at an end of the at least two wings opposite the grommet base;
a wing tip at the end of the at least two wings; and
an engagement region formed on the at least two wings between the grommet base and the fingers to engage and detach with the slot; and
a clip having a head at one end of the clip, the clip comprising:
a clip base at an opposite end of the head such that the clip base engages the housing;
two laterally spaced apart parallel walls extending from the clip base;
ramp portions formed on the head of each wall on the end opposite the clip base;
a shoulder formed on each wall in the head; and
a taper formed on the two laterally spaced apart parallel walls between the head and the clip base;
wherein as the clip is inserted into the opening so that the shoulder on each wall slides past the fingers and engages the wing tip.

21. The vehicle of claim 20, further comprising:
a paddle formed on the at least two wings adjacent to the grommet base wherein the paddle engages an inside surface of the slot to resist further insertion of the grommet into the slot.
